# EUROPEAN PATENT APPLICATION

(11) **EP 4 746 334 A1**
(43) Date of publication of application: **20.05.2026**
(21) Application number: 24923303.2
(22) Date of filing: 05.09.2024
(51) Int. Cl.: H04L 5/00

(54) **COMMUNICATION METHOD AND DEVICE**

(30) Priority: 06.02.2024 CN 202410173831
(71) Applicant: Huawei Technologies Co., Ltd., Shenzhen, Guangdong 518129 (CN)
(72) Inventor: YU, Xian, Shenzhen, Guangdong 518129 (CN); YANG, Wei, Shenzhen, Guangdong 518129 (CN); XU, Wei, Shenzhen, Guangdong 518129 (CN); YOU, Xihe, Shenzhen, Guangdong 518129 (CN)
(74) Representative: Gill Jennings & Every LLP
(86) International application number: PCT/CN2024/117183
(87) International publication number: WO 2025/167094

(57) **Abstract**

A communication method and apparatus are applied to a wireless communication system, to improve hardware utilization and reduce power consumption. The apparatus includes: an application processor, a radio frequency front-end, and N communication processors that are separately connected to the application processor and the radio frequency front-end. The N communication processors one-to-one correspond to N wireless communication standards. The application processor is configured to: when determining to enable or disable a wireless communication service, indicate the first communication processor to configure the radio frequency front-end according to a wireless communication standard that corresponds to the wireless communication service, and control a running status of a corresponding communication processor of the N communication processors according to the wireless communication standard that corresponds to the wireless communication service.

## Description

### CROSS-REFERENCE TO RELATED APPLICATIONS

This application claims priority to Chinese Patent Application No. 202410173831.2, filed with the China National Intellectual Property Administration on February 6, 2024 and entitled "COMMUNICATION METHOD AND APPARATUS", which is incorporated herein by reference in its entirety.

### TECHNICAL FIELD

Embodiments of this application relate to the field of wireless communication technologies, and in particular, to a communication method and apparatus.

### BACKGROUND

A current communication apparatus (for example, a handheld terminal) may support multimode communication, for example, may support a plurality of wireless communication standards such as terrestrial network communication (for example, a cellular communication system), short-range communication, and non-terrestrial network communication (for example, satellite communication). This requires that the communication apparatus have corresponding signal processors and radio frequency front-ends for different wireless communication standards.

For the communication apparatus that supports multimode communication, how to improve hardware utilization and reduce power consumption is a problem that needs to be resolved currently.

### SUMMARY

Embodiments of this application provide a communication method and apparatus, to improve hardware utilization and reduce power consumption for a communication apparatus that supports multimode communication.

According to a first aspect, a communication apparatus is provided, including an application processor, a radio frequency front-end, and N communication processors that are separately connected to the application processor and the radio frequency front-end. The N communication processors one-to-one correspond to N wireless communication standards. Each of the N communication processors is configured to: process a signal from the application processor according to a corresponding wireless communication standard and then send a processed signal to the radio frequency front-end, or process a signal from the radio frequency front-end and then send a processed signal to the application processor. The N communication processors include a first communication processor, the first communication processor corresponds to a first communication standard, and N is an integer greater than 1.

The application processor is configured to: when determining to enable or disable a wireless communication service, indicate the first communication processor to configure the radio frequency front-end according to a wireless communication standard that corresponds to the wireless communication service, and control a running status of a corresponding communication processor of the N communication processors according to the wireless communication standard that corresponds to the wireless communication service. The first communication processor is configured to indicate, according to an indication of the application processor, the radio frequency front-end to be configured to be in a communication state matching the wireless communication standard that corresponds to the wireless communication service, or to be configured to be in a sleep state or an off state. The radio frequency front-end is configured to be configured, according to an indication of the first communication processor, to be in the communication state matching the wireless communication standard that corresponds to the wireless communication service, the sleep state, or the off state.

In the foregoing implementation, the N communication processors may reuse one radio frequency front-end. Therefore, compared with a case in which one corresponding radio frequency front-end is disposed for each communication processor, this can reduce hardware redundancy, improve hardware utilization, and reduce power consumption. In addition, in this embodiment of this application, after the wireless communication service is disabled, the radio frequency front-end may be controlled to enter the sleep state or the off state, which further reduces power consumption.

In a possible implementation, the application processor is specifically configured to: when determining to enable a wireless communication service that corresponds to a second wireless communication standard, and the N communication processors are all in a sleep state, wake up the first communication processor, indicate the first communication processor to configure the radio frequency front-end according to the second wireless communication standard, and control a second communication processor that is of the N communication processors and that corresponds to the second wireless communication standard to enter a working state. The first communication processor is specifically configured to: indicate, according to the indication of the application processor, the radio frequency front-end to be configured to be in a communication state matching the second wireless communication standard, and enter the sleep state after indicating the radio frequency front-end to be configured to be in the communication state corresponding to the second wireless communication standard.

In a possible implementation, the application processor is further configured to: when determining to disable the wireless communication service that corresponds to the second wireless communication standard, control the second communication processor to enter the sleep state, wake up the first communication processor, and indicate the first communication processor to configure the radio frequency front-end to be in the sleep state or the off state. The first communication processor is further configured to: indicate, according to the indication of the application processor, the radio frequency front-end to be configured to be in the sleep state or the off state, and enter the sleep state after indicating the radio frequency front-end to be configured to be in the sleep state or the off state. This can reduce power consumption of the communication apparatus.

In a possible implementation, the application processor is specifically configured to: when determining to enable the communication service that corresponds to the second wireless communication standard, and the first communication processor is in the working state, indicate the first communication processor to configure the radio frequency front-end according to the first wireless communication standard and the second wireless communication standard, and control the second communication processor that is of the N communication processors and that corresponds to the second wireless communication standard to enter the working state. The first communication processor is specifically configured to indicate, according to the indication of the application processing, the radio frequency front-end to be configured to be in a communication state matching the first wireless communication standard and the second wireless communication standard.

In a possible implementation, the application processor is further configured to: when determining to disable the communication service that corresponds to the second wireless communication standard, control the second communication processor to enter the sleep state, and indicate the first communication processor to configure the radio frequency front-end to be in a communication state matching the first wireless communication standard. The first communication processor is further configured to indicate, according to the indication of the application processor, the radio frequency front-end to be configured to be in the communication state matching the first wireless communication standard. This can reduce power consumption of the communication apparatus.

In a possible implementation, the first wireless communication standard is a terrestrial network communication standard, and the first communication processor is a terrestrial network communication processor. The second wireless communication standard is a short-range communication standard, and the second communication processor is a short-range communication processor.

In a possible implementation, the application processor is specifically configured to: when determining to enable a communication service that corresponds to a third wireless communication standard, and the first communication processor is in the working state, first indicate the first communication processor to perform a graceful shutdown after the radio frequency front-end is configured to be in the sleep state or the off state, then wake up the first communication processor, indicate the first communication processor to configure the radio frequency front-end according to the third wireless communication standard, and control a third communication processor that is of the N communication processors and that corresponds to the third wireless communication standard to enter the working state. The first communication processor is specifically configured to: indicate, according to the indication of the application processing, the radio frequency front-end to be configured to be in the sleep state or the off state, perform the graceful shutdown, indicate, according to the indication of the application processor after the first communication processor is woken up by the application processor, the radio frequency front-end to be configured to be in a communication state matching the third wireless communication standard, and enter the sleep state after indicating the radio frequency front-end to be configured to be in the communication state matching the third wireless communication standard.

In a possible implementation, the application processor is further configured to: when determining to disable the communication service that corresponds to the third wireless communication standard, control the third communication processor to enter the sleep state, wake up the first communication processor, and indicate the first communication processor to configure the radio frequency front-end to be in the sleep state or the off state. The first communication processor is further configured to: indicate, according to the indication of the application processor, the radio frequency front-end to be configured to be in the sleep state or the off state, and enter the sleep state after indicating the radio frequency front-end to be configured to be in the sleep state or the off state. This can reduce power consumption of the communication apparatus.

In a possible implementation, the first wireless communication standard is the terrestrial network communication standard, and the first communication processor is the terrestrial network communication processor. The third wireless communication standard is a satellite communication standard, and the third communication processor is a satellite communication processor.

In a possible implementation, a power module configured to supply power to the radio frequency front-end is further included. The first communication processor is further configured to send a control signal to the power module, and the control signal is used to control the power module to stop supplying power to the radio frequency front-end. Alternatively, the first communication processor is specifically configured to send a control signal to the radio frequency front-end, and the control signal indicates the radio frequency front-end to disconnect from the power module.

According to a second aspect, a communication method is provided and is applied to a communication apparatus. The communication apparatus includes an application processor, a radio frequency front-end, and N communication processors that are separately connected to the application processor and the radio frequency front-end. The N communication processors one-to-one correspond to N wireless communication standards. The N communication processors include a first communication processor, the first communication processor corresponds to a first communication standard, and N is an integer greater than 1. The method includes: The application processor determines to enable or disable a wireless communication service; the application processor indicates the first communication processor to configure the radio frequency front-end according to a wireless communication standard that corresponds to the wireless communication service; and the application processor controls a running status of a corresponding communication processor of the N communication processors according to the wireless communication standard that corresponds to the wireless communication service.

In a possible implementation, if the application processor determines to enable a wireless communication service that corresponds to a second wireless communication standard, and the N communication processors are all in a sleep state, that the application processor indicates the first communication processor to configure the radio frequency front-end according to the wireless communication standard that corresponds to the wireless communication service includes: The application processor wakes up the first communication processor, and indicates the first communication processor to configure the radio frequency front-end according to the second wireless communication standard. That the application processor controls the running status of the corresponding communication processor of the N communication processors according to the wireless communication standard that corresponds to the wireless communication service includes: The application processor controls the second communication processor that is of the N communication processors and that corresponds to the second wireless communication standard to enter the working state.

In a possible implementation, when the application processor determines to disable the wireless communication service that corresponds to the second wireless communication standard, the method further includes: The application processor controls the second communication processor to enter the sleep state; and the application processor wakes up the first communication processor, and indicates the first wireless communication processor to configure the radio frequency front-end to be in a sleep state or an off state.

In a possible implementation, if the application processor determines to enable the wireless communication service that corresponds to the second wireless communication standard, and the first communication processor is in the working state, that the application processor indicates the first communication processor to configure the radio frequency front-end according to the wireless communication standard that corresponds to the wireless communication service includes: The application processor indicates the first communication processor to configure the radio frequency front-end according to the first wireless communication standard and the second wireless communication standard. That the application processor controls the running status of the corresponding communication processor of the N communication processors according to the wireless communication standard that corresponds to the wireless communication service includes: The application processor controls the second communication processor that is of the N communication processors and that corresponds to the second wireless communication standard to enter the working state.

In a possible implementation, when the application processor determines to disable the communication service that corresponds to the second wireless communication standard, the method further includes: The application processor controls the second communication processor to enter the sleep state; and the application processor indicates the first wireless communication processor to configure the radio frequency front-end to be in a communication state matching the first wireless communication standard.

In a possible implementation, if the application processor determines to enable a wireless communication service that corresponds to a third wireless communication standard, and the first communication processor is in the working state, that the application processor indicates the first communication processor to configure the radio frequency front-end according to the wireless communication standard that corresponds to the wireless communication service includes: The application processor indicates the first communication processor to perform a graceful shutdown after the radio frequency front-end is configured to be in the sleep state or the off state; and the application processor wakes up the first communication processor, and indicates the first communication processor to configure the radio frequency front-end according to the third wireless communication standard. That the application processor controls the running status of the corresponding communication processor of the N communication processors according to the wireless communication standard that corresponds to the wireless communication service includes: The application processor controls a third communication processor that is of the N communication processors and that corresponds to the third wireless communication standard to enter the working state.

In a possible implementation, when the application processor determines to disable the communication service that corresponds to the third wireless communication standard, the method further includes: The application processor controls the third communication processor to enter the sleep state; and the application processor wakes up the first wireless communication processor, and indicates the first wireless communication processor to configure the radio frequency front-end to be in the sleep state or the off state.

According to a third aspect, a communication apparatus is provided, including a unit or a module configured to perform the method according to any implementation of the second aspect. The communication apparatus is, for example, the application processor in the communication apparatus in the first aspect or the second aspect. The communication apparatus may include a processing unit and a transceiver unit. The application processor is configured to: determine to enable or disable a wireless communication service, indicate, through the transceiver unit, the first communication processor to configure a radio frequency front-end according to a wireless communication standard that corresponds to the wireless communication service, and control, through the transceiver unit, a running status of a corresponding communication processor of the N communication processors according to the wireless communication standard that corresponds to the wireless communication service.

In a possible implementation, the processing unit is specifically configured to: when determining to enable a wireless communication service that corresponds to a second wireless communication standard, and the N communication processors are all in a sleep state, wake up, through the transceiver unit, the first communication processor, and indicate the first communication processor to configure the radio frequency front-end according to the second wireless communication standard, and the processing unit controls, through the transceiver unit, a second communication processor that is of the N communication processors and that corresponds to the second wireless communication standard to enter a working state.

In a possible implementation, the processing unit is further configured to: when determining to disable the wireless communication service that corresponds to the second wireless communication standard, control, through the transceiver unit, the second communication processor to enter the sleep state, wake up, through the transceiver unit, the first communication processor, and indicate the first wireless communication processor to configure the radio frequency front-end to be in a sleep state or an off state.

In a possible implementation, the processing unit is specifically configured to: if determining to enable the wireless communication service that corresponds to the second wireless communication standard, and the first communication processor is in the working state, indicate, through the transceiver unit, the first communication processor to configure the radio frequency front-end according to the first wireless communication standard and the second wireless communication standard, and control, through the transceiver unit, the second communication processor that is of the N communication processors and that corresponds to the second wireless communication standard to enter the working state.

In a possible implementation, the processing unit is further configured to: when determining to disable the communication service that corresponds to the second wireless communication standard, control, through the transceiver unit, the second communication processor to enter the sleep state, and indicate, through the transceiver unit, the first wireless communication processor to configure the radio frequency front-end to be in a communication state matching the first wireless communication standard.

In a possible implementation, the processor unit is specifically configured to: when determining to enable a wireless communication service that corresponds to a third wireless communication standard, and the first communication processor is in the working state, indicate, through the transceiver unit, the first communication processor to perform a graceful shutdown after the radio frequency front-end is configured to be in the sleep state or the off state, wake up, through the transceiver unit, the first communication processor, and indicate the first communication processor to configure the radio frequency front-end according to the third wireless communication standard, and the processor unit controls, through the transceiver unit, a third communication processor that is of the N communication processors and that corresponds to the third wireless communication standard to enter the working state.

In a possible implementation, the processing unit is further configured to: when determining to disable the communication service that corresponds to the third wireless communication standard, control, through the transceiver unit, the third communication processor to enter the sleep state, wake up, through the transceiver unit, the first wireless communication processor, and indicate the first wireless communication processor to configure the radio frequency front-end to be in a sleep state or an off state.

According to a fourth aspect, a communication apparatus is provided, including one or more processors. The one or more processors are configured to perform the method according to any implementation of the second aspect.

In a possible implementation, the communication apparatus further includes one or more memories. The one or more memories store one or more programs. When the program is executed by the one or more processors, the communication apparatus is enabled to perform the method according to any implementation of the second aspect.

According to a fifth aspect, a readable storage medium is provided. The readable storage medium includes a program. When the program is run on an apparatus, the apparatus is enabled to perform the method according to any implementation of the second aspect.

According to a sixth aspect, a chip system is provided. The chip system includes at least one chip and a memory, and the at least one chip is configured to read and execute a program stored in the memory, to implement the method according to any implementation of the second aspect.

According to a seventh aspect, a computer program product is provided. When the computer program product runs on an apparatus, the apparatus is enabled to perform the method according to any implementation of the second aspect.

According to an eighth aspect, a program product is provided. When the program product runs on a device, the device is enabled to perform the method according to any implementation of the second aspect.

### BRIEF DESCRIPTION OF DRAWINGS

FIG. 1 is a diagram of a structure of a communication apparatus in a related technology;
FIG. 2 is a diagram of a structure of a communication apparatus according to an embodiment of this application;
FIG. 3 is a diagram of a structure of a communication processor according to an embodiment of this application;
FIG. 4 is a diagram of a structure of a radio frequency front-end according to an embodiment of this application;
FIG. 5 is a diagram of an example structure of a communication apparatus according to an embodiment of this application;

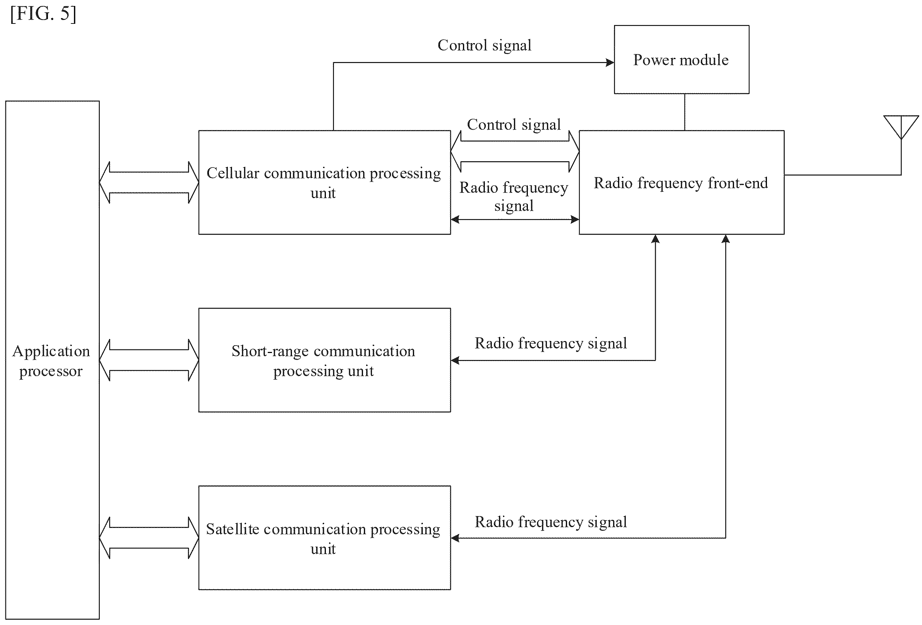

FIG. 6a-1 and FIG. 6a-2 are a schematic flowchart of enabling a short-range communication service based on the communication apparatus shown in FIG. 5;

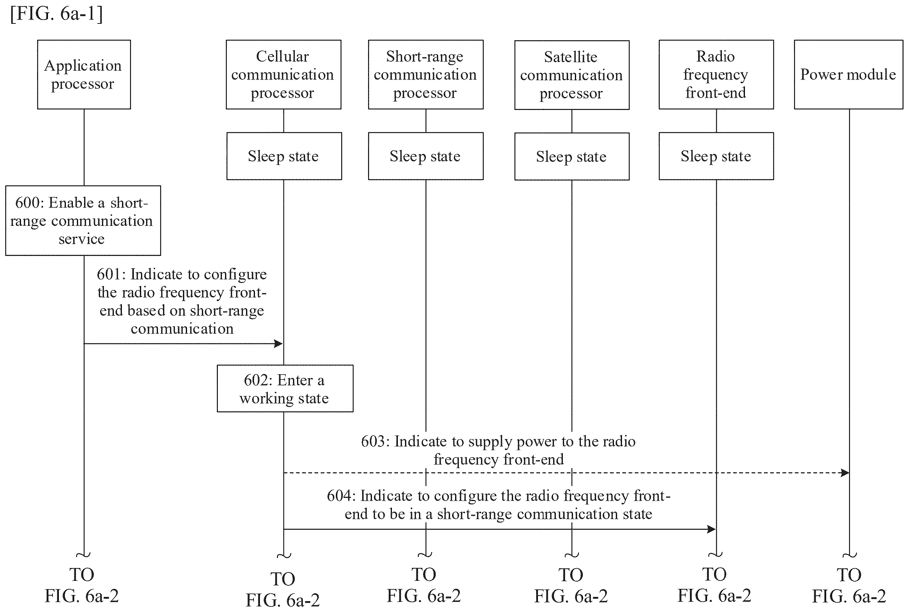

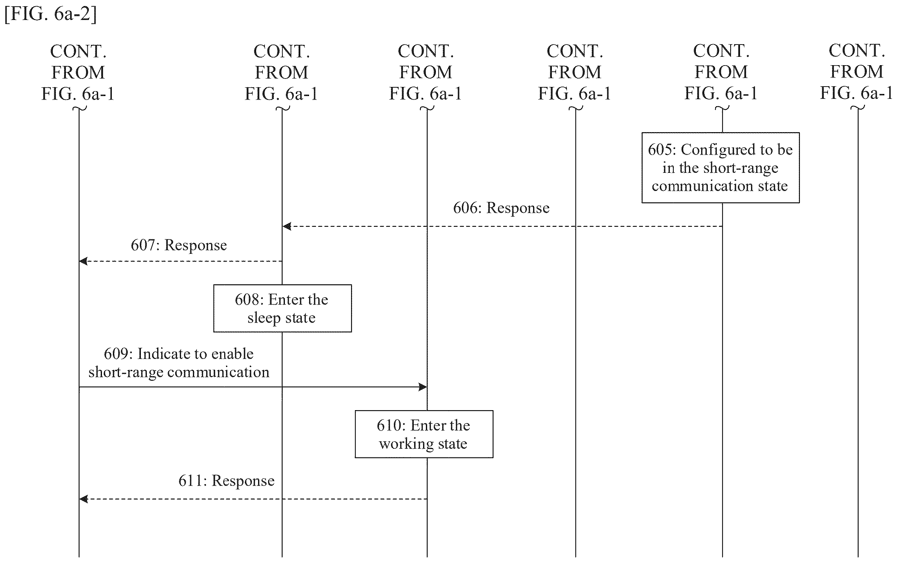

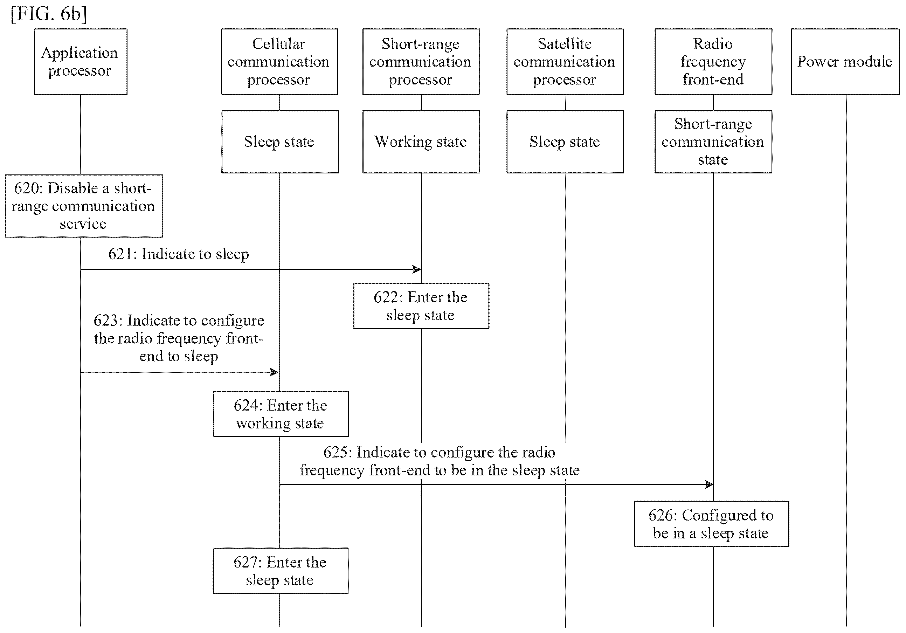

FIG. 6b is a schematic flowchart of disabling a short-range communication service based on the communication apparatus shown in FIG. 5;

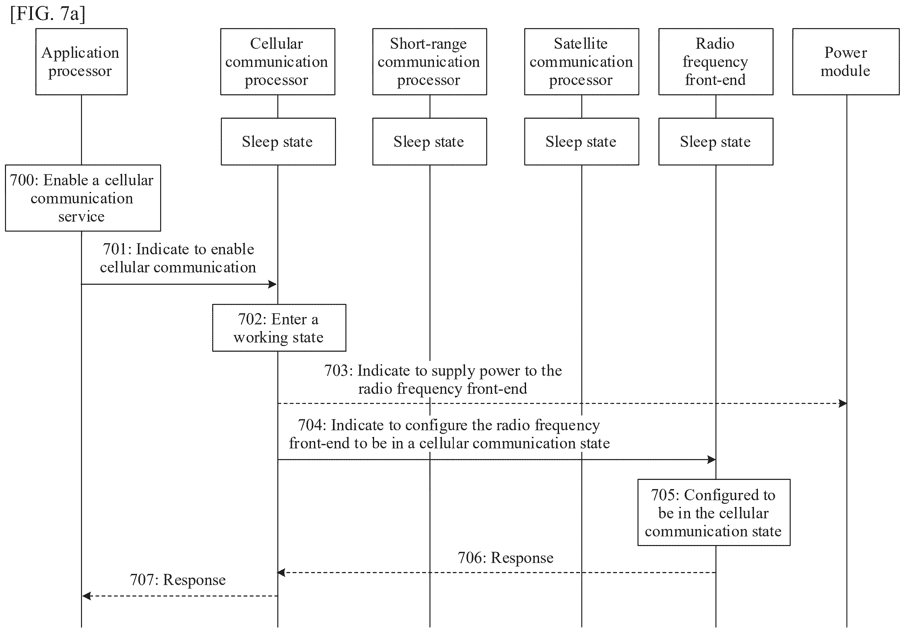

FIG. 7a is a schematic flowchart of enabling a cellular communication service based on the communication apparatus shown in FIG. 5;

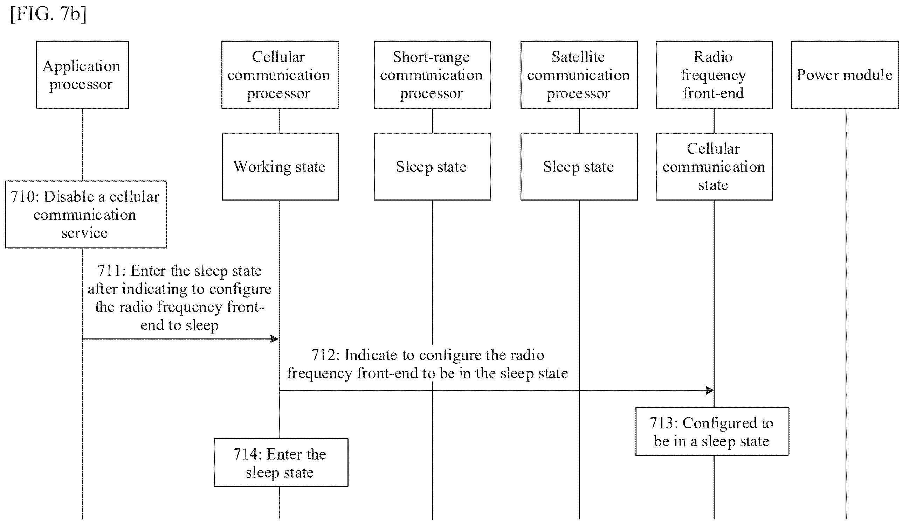

FIG. 7b is a schematic flowchart of disabling a cellular communication service based on the communication apparatus shown in FIG. 5;
FIG. 8a-1 and FIG. 8a-2 are a schematic flowchart of enabling a satellite communication service based on the communication apparatus shown in FIG. 5;

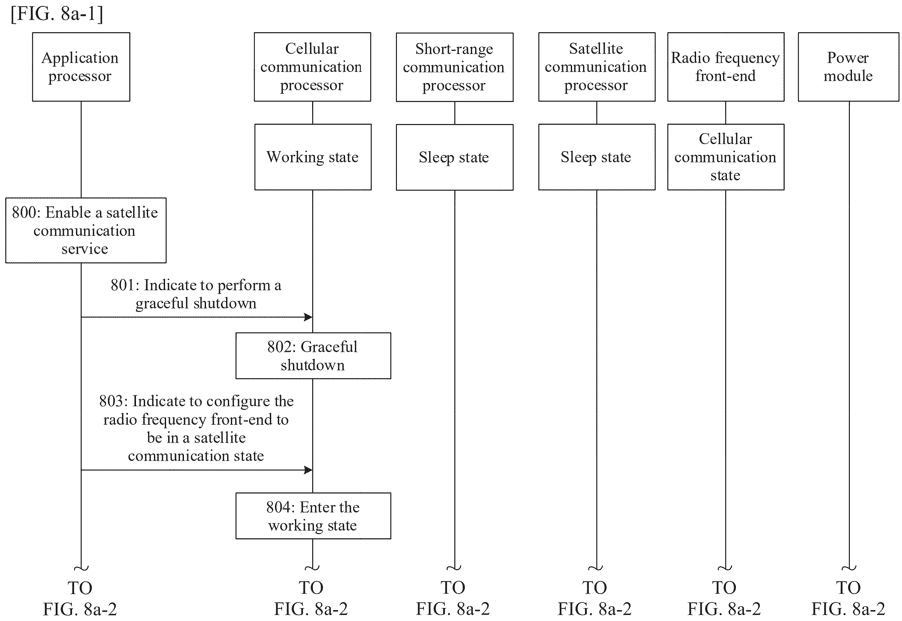

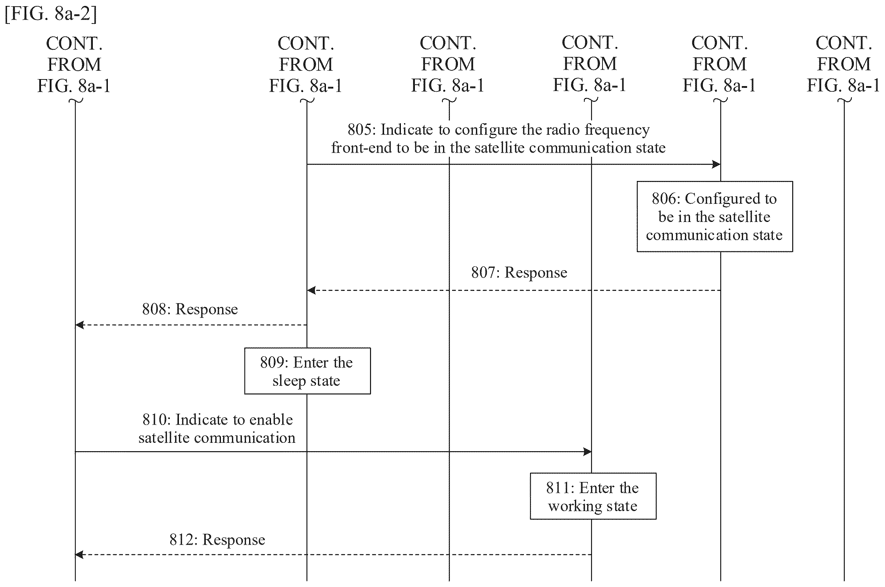

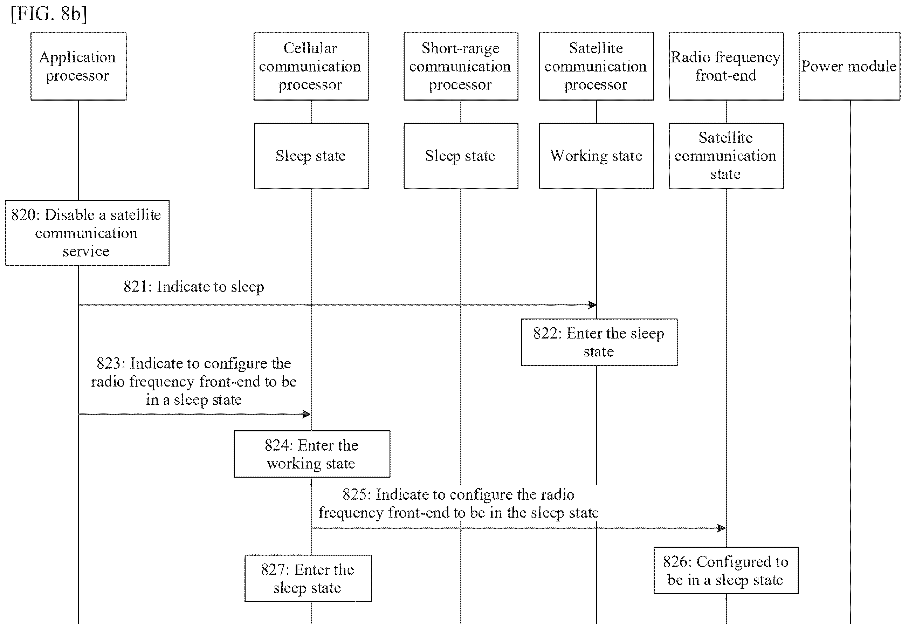

FIG. 8b is a schematic flowchart of disabling a satellite communication service based on the communication apparatus shown in FIG. 5;

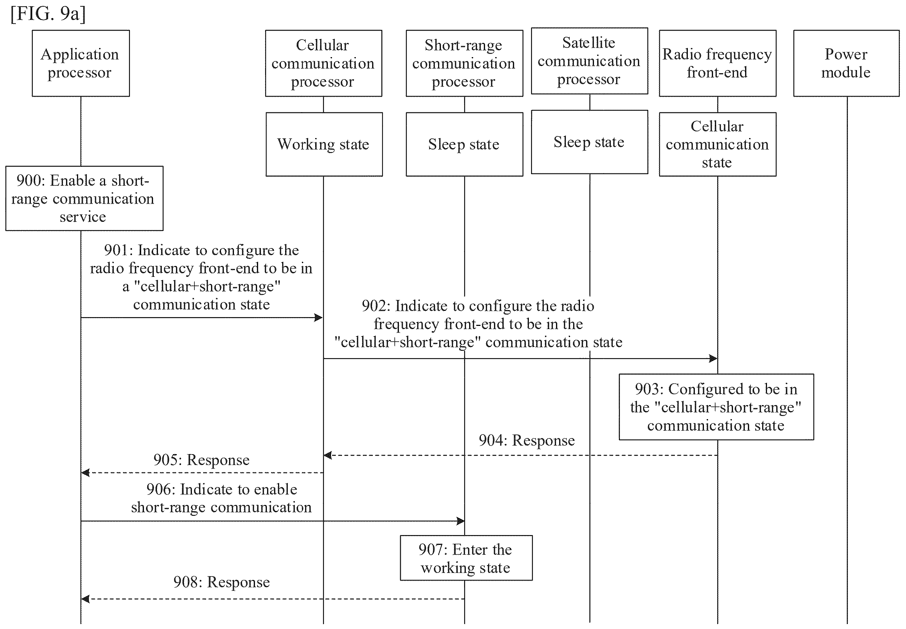

FIG. 9a is a schematic flowchart of enabling both a cellular communication service and a short-range communication service based on the communication apparatus shown in FIG. 5;

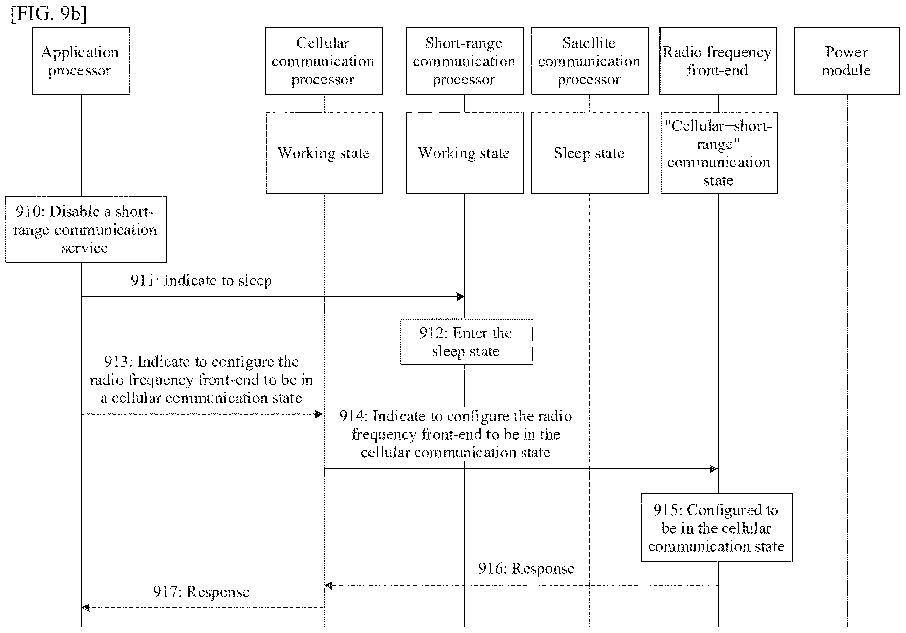

FIG. 9b is a schematic flowchart of disabling a short-range communication service based on the communication apparatus shown in FIG. 5;

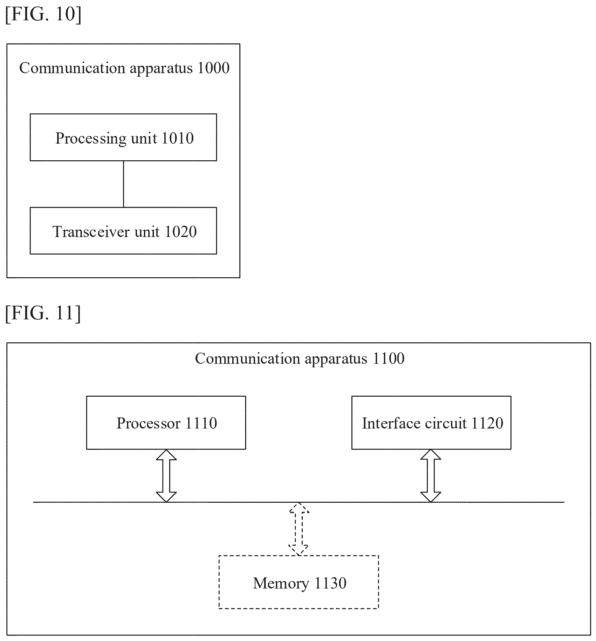

FIG. 10 is a diagram of a structure of a communication apparatus according to an embodiment of this application; and
FIG. 11 is a diagram of a structure of another communication apparatus according to an embodiment of this application.

### DESCRIPTION OF EMBODIMENTS

A communication apparatus (for example, a handheld terminal) may integrate communication functions of a plurality of communication systems such as a terrestrial network communication system, a short-range communication system, and a non-terrestrial network communication system. In a communication apparatus provided in a related technology, a complete set of a communication processor, a radio frequency front-end, and a power supply network is independently configured for the plurality of communication systems.

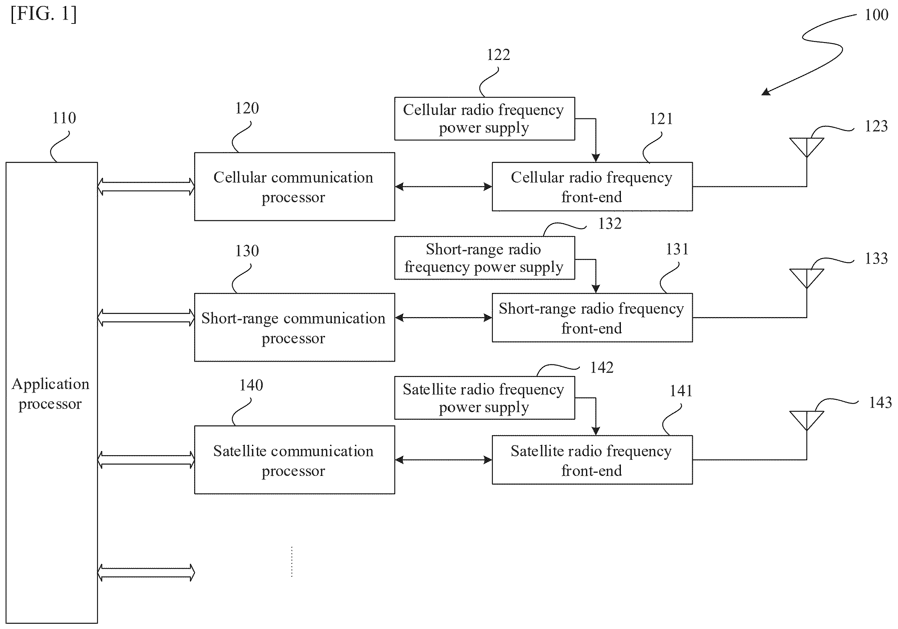

FIG. 1 shows a structure of a communication apparatus provided in a related technology. The communication apparatus 100 integrates communication functions of a plurality of communication systems such as a cellular communication system, a short-range communication system, and a satellite communication system, and a complete set of a communication processor, a radio frequency front-end, and a power supply is independently configured for each communication system. As shown in FIG. 1, the communication apparatus 100 includes an application processor 110. A cellular communication processor 120, a cellular radio frequency front-end 121, and an antenna 123 are deployed for a cellular communication system, a short-range communication processor 130, a short-range radio frequency front-end 131, and an antenna 133 are deployed for a short-range communication system, and a satellite communication processor 140, a satellite radio frequency front-end 141, and an antenna 143 are deployed for a satellite communication system. The cellular radio frequency front-end 121 is powered by a cellular radio frequency power supply 122, the short-range radio frequency front-end 131 is powered by a short-range radio frequency power supply 132, and the satellite radio frequency front-end 141 is powered by a satellite radio frequency power supply 142.

In the communication apparatus shown in FIG. 1, a set of hardware structure is separately deployed for different communication systems. As a result, hardware utilization is low, and power consumption is high. For example, when the communication apparatus simultaneously performs communication services that correspond to a plurality of wireless communication standards (for example, simultaneously performs a cellular communication service and a short-range communication service), a plurality of radio frequency front-ends simultaneously run, which results in high power consumption of the communication apparatus.

Therefore, embodiments of this application provide a communication apparatus and a communication method implemented based on the communication apparatus, so that communication processors that correspond to a plurality of wireless communication standards reuse a same radio frequency front-end, thereby improving hardware utilization and reducing power consumption.

To more clearly understand this application, the following first describes technologies and technical terms used in this application.

### 1. Wireless communication standard

The communication apparatus in embodiments of this application supports multimode communication, in other words, has a function of supporting a plurality of wireless communication standards. In embodiments of this application, the wireless communication standard may also be understood as a wireless communication system standard, a network standard, or a wireless communication manner.

For example, the communication apparatus in embodiments of this application may support two or more of the following wireless communication standards.

### (1) Terrestrial network communication

A type of the terrestrial network communication standard is cellular mobile communication (cellular mobile communication). Cellular mobile communication uses a cellular wireless networking manner, and a terminal device and a network device are connected through a wireless channel, so that users can communicate with each other in an activity.

For example, the communication apparatus in embodiments of this application may support one or more of the following cellular mobile communication: a second-generation mobile communication (2nd generation mobile communication technology, 2G) technology, 3G, 4G, 5G, 6G, an evolved mobile communication technology, and the like. This is not limited in this application.

Another type of the terrestrial network communication standard is microwave communication (microwave communication). The terrestrial network communication standard supported by the communication apparatus is not limited in embodiments of this application.

It should be understood that in different terrestrial network communication standards, processing such as encoding and modulation on a signal may be performed according to different wireless communication protocols as required. Therefore, different communication processors need to be deployed. For example, communication processors that correspond to a plurality of different terrestrial network communication standards may be deployed in the communication apparatus.

### (2) Short-range communication

Short-range communication may also be referred to as short-distance communication (short-distance communication), and usually is a wireless communication standard in which communication is performed through a wireless communication serial bus (universal serial bus, USB), an IEEE 802.11 communication protocol, TransferJet, or a wireless high-definition multimedia interface (high-definition multimedia interface, HDMI).

For example, the communication apparatus in embodiments of this application may support one or more of the following short-range communication standards: Bluetooth (Bluetooth), wireless local area network 802.11 (Wi-Fi), near-field communication (near-field communication, NFC), ultra-wideband (ultra-wideband, UWB), and Greentooth (NearLink or referred to as SparkLink). This is not limited in this application.

It should be understood that in different short-range communication standards, processing such as encoding and modulation on a signal may be performed according to different wireless communication protocols as required. Therefore, different communication processors need to be deployed. For example, communication processors that correspond to a plurality of different short-range communication standards may be deployed in the communication apparatus.

### (3) Satellite communication

Satellite communication is a communication standard in which a signal is transmitted by using an artificial satellite. For example, a signal is sent to a satellite through a terrestrial station, and then the signal is forwarded to a target location by the satellite.

For example, the communication apparatus in embodiments of this application may support one or more of the following satellite communication standards: BeiDou satellite communication, Tiantong satellite communication, China SatNet satellite communication, and the like. This is not limited in this application.

It should be understood that in different satellite communication standards, processing such as encoding and modulation on a signal may be performed according to different wireless communication protocols as required. Therefore, different communication processors need to be deployed. For example, communication processors that correspond to a plurality of different satellite communication standards may be deployed in the communication apparatus.

### 2. Running status of a communication processor

In embodiments of this application, the running status of the communication processor includes a working state and a sleep state (or referred to as a low power consumption state). When the communication processor is in the working state, the communication processor may perform signal processing, for example, may perform encoding and modulation on a signal, or may perform demodulation and decoding on a signal. When the communication processor is in the sleep state, some or all of power supplies are powered off, and the communication processor cannot implement a signal processing function.

The running status of the communication processor may be controlled by an application processor. For example, when determining to enable a short-range communication service, or determining to enable a short-range communication standard, the application processor wakes up a short-range communication processor in the sleep state, for example, powers on the short-range communication processor. For another example, when determining to disable the short-range communication service, or determining to disable the short-range communication standard, the application processor controls the short-range communication processor to enter the sleep state, for example, powers off the short-range communication processor.

### 3. Status of a radio frequency front-end

In embodiments of this application, the status of the radio frequency front-end includes a working state and a sleep state (or referred to as a low power consumption state), or the status of the radio frequency front-end includes a working state and an off state, or the status of the radio frequency front-end includes a working state, a sleep state, and an off state.

When the radio frequency front-end is in the working state, the radio frequency front-end may perform processing such as amplification and filtering on a signal. According to different wireless communication standards, the working state of the radio frequency front-end may include communication states corresponding to different wireless communication standards. For example, if the communication apparatus may support cellular communication, short-range communication, and satellite communication, the working state of the radio frequency front-end may include a cellular communication state matching the cellular communication standard, a short-range communication state matching the short-range communication standard, and a satellite communication state matching satellite communication. The communication apparatus may use both cellular communication and short-range communication, and therefore, the working state of the radio frequency front-end may further include a communication state matching cellular communication and short-range communication. The communication state may be referred to as a "cellular+short-range" communication state for short.

When the radio frequency front-end is in the sleep state, some or all of active components inside the radio frequency front-end are powered off (for example, components such as a power amplifier and a low noise amplifier are powered off), and the radio frequency front-end cannot implement a signal processing function.

When supplying power to the radio frequency front-end is stopped, or a connection between the radio frequency front-end and a power supply is disconnected, the radio frequency front-end enters the turn-off state, and the turn-off state may also be referred to as an off state.

The running status of the radio frequency front-end may be controlled by a main control communication processor. For example, one of a plurality of communication processors included in the communication apparatus may be configured as a main control communication processor, and the main control communication processor serves as an agent of the application processor to control the status of the radio frequency front-end. The main control communication processor may indicate, according to an indication of the application processor, the radio frequency front-end to be configured to be in a corresponding state.

For example, if the application processor indicates a main control communication processor to configure the radio frequency front-end to be in the cellular communication state, the main control communication processor sends a control signal to the radio frequency front-end, so that the radio frequency front-end is configured to be in the cellular communication state.

For another example, if the application processor indicates a main control communication processor to configure the radio frequency front-end to be in the sleep state, the main control communication processor sends a control signal to the radio frequency front-end, so that the radio frequency front-end enters the sleep state.

For still another example, if the application processor indicates a main control communication processor to configure the radio frequency front-end to be in the off state, the main control communication processor sends a control signal to the radio frequency front-end, or sends a control signal to the power supply configured to supply power to the radio frequency front-end, so that the radio frequency front-end is powered off and enters the off state.

The communication apparatus in embodiments of this application may include a terminal device. The terminal device may also be referred to as a terminal, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, a smart grid, smart furniture, a smart office, smart wearable, smart transportation, and a smart city. The terminal device may be a mobile phone, a tablet computer, a computer having a wireless transceiver function, a wearable device, a vehicle, an uncrewed aerial machine, a helicopter, an airplane, a ship, a robot, a robotic arm, a smart home device, or the like. A specific technology and a specific device form that are used by the terminal device are not limited in embodiments of this application.

The following describes embodiments of this application in detail with reference to the accompanying drawings.

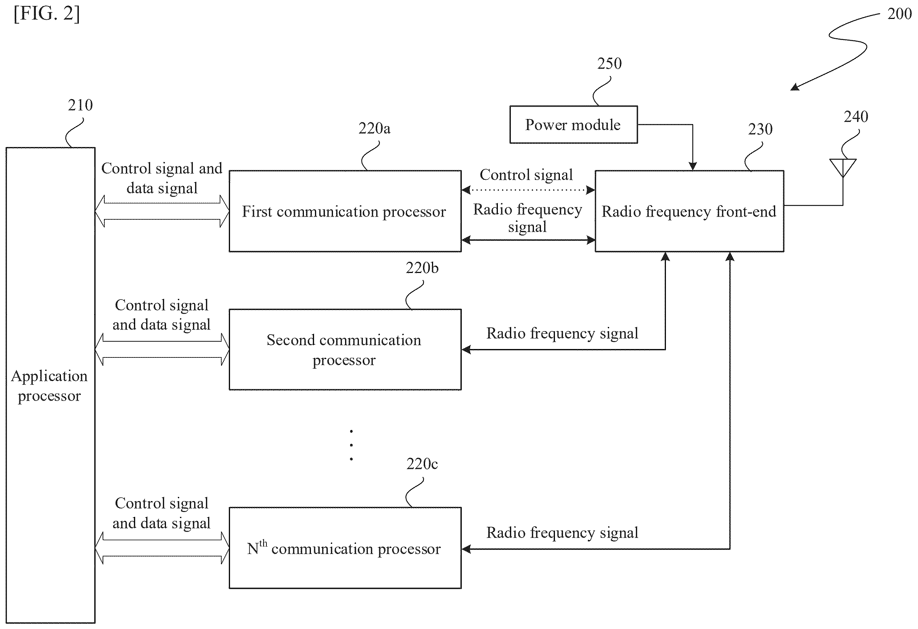

FIG. 2 is a diagram of a structure of a communication apparatus according to an embodiment of this application. As shown in FIG. 2, the communication apparatus 200 includes an application processor 210, N (N is an integer greater than or equal to 2) communication processors (for example, 220a, 220b, and 220c), a radio frequency front-end 230, an antenna 240, and a power module 250. The N communication processors are separately connected to the application processor 210 and the radio frequency front-end 230. That is, the N communication processors reuse one radio frequency front-end (radio frequency front-end, RFFE).

The application processor 210 and the communication processor may exchange a control signal and data through an advanced message interface (advanced messaging interface, AMI). A communication interface between the application processor and the communication processor is not limited in this application. Optionally, data of an application may be exchanged between the application processor 210 and the communication processor through shared memory.

The application processor 210 is also referred to as an AP (application processor), or referred to as a multimedia application processor (multimedia application processor, MAP). An operating system, a user interface, and an application run on the application processor 210, to implement functions such as multimedia and communication data processing and storage.

In a possible implementation, the application processor 210 may be formed as a very large scale integrated circuit by extending audio and video functions and a dedicated interface on a basis of a low power central processing unit (central processing unit, CPU). The application processor 210 may be externally connected to an external integrated circuit (integrated circuit, IC) such as a double data rate synchronous dynamic random access memory (DDR SDRAM, where the DDR is short for double data rate, that is, double data rate, and the SDRAM is short for synchronous dynamic random access memory, that is, synchronous dynamic random access memory), or a flash (FLASH) memory, to form a system on a chip (system on a chip, SoC, or referred to as a system on chip).

In the communication apparatus 200, the N communication processors (for example, 220a, 220b, and 220c) one-to-one correspond to N wireless communication standards. For related descriptions of the wireless communication standards, refer to the foregoing description. Each of the N communication processors corresponds to one wireless communication standard, and different communication processors correspond to different wireless communication standards. In other words, based on different wireless communication standards, each of the N communication processors is independently disposed.

For example, the N communication processors include a first communication processor, a second communication processor, and a third communication processor. For example, the first communication processor may correspond to a cellular communication standard, the first communication processor may also be referred to as a cellular communication processor, and the cellular communication processor may perform signal processing in an encoding manner and a signal modulation manner required by the cellular communication standard (or according to a cellular communication protocol); the second communication processor may correspond to a short-range communication standard, the second communication processor may also be referred to as a short-range communication processor, and the short-range communication processor may perform signal processing in an encoding manner and a signal modulation manner required by the short-range communication standard (or according to a short-range communication protocol); and the third communication processor may correspond to a satellite communication standard, the third communication processor may also be referred to as a satellite communication processor, and the satellite communication processor may perform signal processing in an encoding manner and a signal modulation manner required by the satellite communication standard (or according to a satellite communication protocol).

It may be understood that types of the wireless communication standards that correspond to the N communication processors are not limited in embodiments of this application.

The communication processor may implement a baseband processing function and a radio frequency processing function. For example, in a signal sending direction, the baseband processing function may include an encoding function (for example, including source encoding and channel encoding) and a modulation function. Data may be encoded into a baseband signal through the encoding function, and the baseband signal may be modulated into a radio frequency signal through the modulation function. In a signal receiving direction, the baseband processing function may include a demodulation function and a decoding function. A radio frequency signal may be demodulated into a baseband signal through the demodulation function, and the baseband signal may be decoded, through the decoding function, into data to be sent to the application processor.

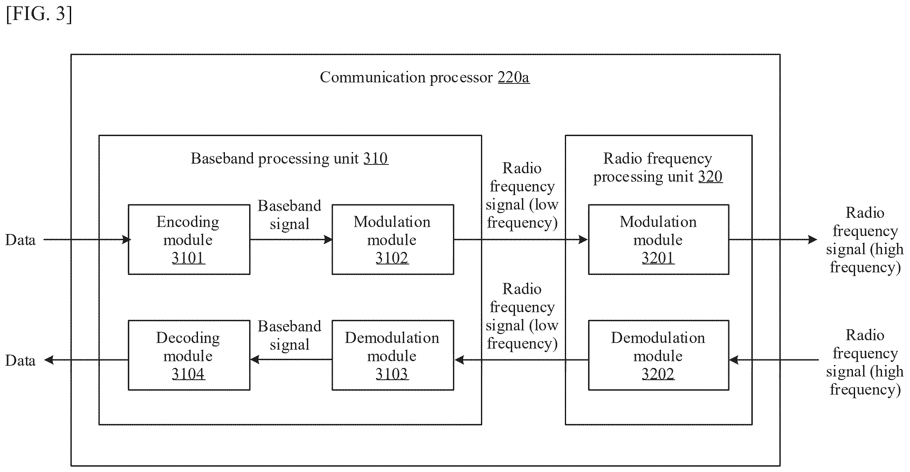

The first communication processor 220a is used as an example. FIG. 3 shows an example of a structure of a communication processor according to an embodiment of this application. As shown in FIG. 3, the first communication processor 220a includes a baseband processing unit 310 and a radio frequency processing unit 320. The baseband processing unit 310 may be implemented by using a baseband chip or a baseband circuit, and the radio frequency processing unit 320 may be implemented by using a radio frequency chip, a radio frequency circuit, or a radio frequency module. The radio frequency processing unit may also be referred to as a radio frequency transceiver.

The baseband processing unit 310 may include an encoding module 3101, a modulation module 3102, a demodulation module 3103, and a decoding module 3104.

The encoding module 3101 may perform encoding processing on data from the application processor 310 to obtain a baseband signal. Optionally, encoding processing may include source encoding processing, for example, adaptive multi-rate (adaptive multi-rate, AMR) speech encoding performed on an audio signal, and MPEG-4 encoding performed on video data. MPEG is short for moving pictures experts group, that is, moving pictures experts group. Optionally, encoding processing may further include channel encoding processing, for example, encoding processing such as a turbo code, a polar code, a low-density parity-check code (low-density parity-check code, LDPC), or a convolutional code.

The modulation module 3102 may modulate the baseband signal to obtain a radio frequency signal of a low frequency. Optionally, a signal modulation method used by the modulation module 3102 may include amplitude shift keying (amplitude shift keying, ASK), frequency shift keying (frequency shift keying, FSK), phase shift keying (phase shift keying, PSK), quadrature amplitude modulation (quadrature amplitude modulation, QAM), and the like.

The demodulation module 3103 may demodulate the radio frequency signal of a relatively low frequency to obtain the baseband signal. A demodulation process performed by the demodulation module 3103 is an inverse process of a modulation process performed by the modulation module 3102.

The decoding module 3104 may decode the baseband signal to obtain data that can be sent to the application processor 210. A decoding process performed by the decoding module 3104 is an inverse process of an encoding process performed by the encoding module 3101.

The radio frequency processing unit 320 may include a modulation module 3201 and a demodulation module 3202. The modulation module 3201 may modulate a radio frequency signal of a low frequency into a radio frequency signal of a high frequency that is suitable for transmission. The demodulation module 3202 may demodulate a radio frequency signal of a high frequency into a radio frequency signal of a low frequency. A demodulation process performed by the demodulation module 3202 is an inverse process of a modulation process performed by the modulation module 3201.

It should be understood that the baseband processing unit 310 and the radio frequency processing unit 320 may further include other functional modules. For example, the baseband processing unit 310 may further include an analog-to-digital conversion module, a sampling module, and the like. This is not limited in this application.

It should be understood that another communication processor of the foregoing N communication processors also has a structure and a function similar to those of the first communication processor 220a.

For each of the N communication processors, according to a wireless communication standard that corresponds to the communication processor, the communication processor may perform processing based on a signal encoding method and a signal modulation method required by the corresponding wireless communication standard (or a wireless communication protocol). For example, for a cellular communication processor configured to implement 5G communication, data may be encoded into a baseband signal in an encoding manner that meets a requirement of a 5G communication protocol, the baseband signal is modulated into a radio frequency signal of a low frequency in a modulation manner that meets a requirement of the 5G communication protocol, and the radio frequency signal of a low frequency is modulated into a radio frequency signal in a frequency band of a 5G system in a modulation manner that meets a requirement of the 5G communication protocol.

In this embodiment of this application, one of the N communication processors may be configured as a main control communication processor. The main control communication processor may send a control signal to the radio frequency front-end according to an indication of the application processor. The control signal is used to configure a communication state of the radio frequency front-end. That is, the main control communication processor may be used as an agent of the application processor to control a status of the radio frequency front-end, and other communication processors do not have a function of configuring the radio frequency front-end.

In this embodiment of this application, an example in which the first communication processor 220a of the N communication processors is used as the main control communication processor is used for description. It should be understood that any one of the N communication processors may be configured as the main control communication processor. This is not limited in this application.

In a possible implementation, the first communication processor 220a is a communication processor that corresponds to a terrestrial network communication standard. For example, the first communication processor 220a is the cellular communication processor. That is, the cellular communication processor may be configured as the main control communication processor. Compared with other wireless communication standards, the cellular communication standard has a high requirement on a control capability. Correspondingly, the cellular communication processor usually has a strong control capability. Therefore, configuring the cellular communication processor as the main control communication processor can fully utilize the powerful control capability of the cellular communication processor, which makes technical implementation simple.

In the communication apparatus 200, the radio frequency front-end 230 is located between the antenna 240 and a radio frequency processing unit (or referred to as a radio frequency transceiver) that is of the communication processor. Functions of the radio frequency front-end 230 are sending and receiving a radio electromagnetic wave signal. Based on the functions, the radio frequency front-end 230 may be divided into a transmit link (TX, or referred to as a transmit channel) and a receive link (RX, or referred to as a receive channel). In the transmit link, the radio frequency front-end 230 performs signal processing such as power amplification, filtering, and switch switching of a radio frequency signal, and finally transmits a processed signal to the outside through the antenna. In the receive link, the antenna 240 receives a radio signal transmitted in space, selects, by using the radio frequency front-end 230, a frequency and a channel required by a user, filters and amplifies a received radio frequency signal, and finally sends a filtered and amplified radio frequency signal to the radio frequency processing unit of the communication processor.

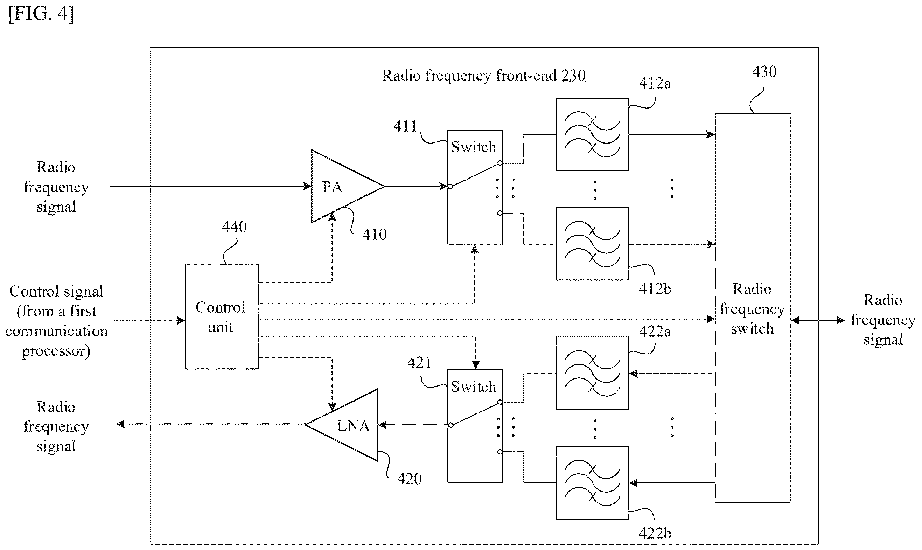

FIG. 4 shows a structure of the radio frequency front-end according to an embodiment of this application. As shown in FIG. 4, the transmit link in the radio frequency front-end 230 may include a power amplifier (power amplifier, PA) 410, a switch 411, and a group of filters (for example, filters 412a and 412b in the figure), and the receive link in the radio frequency front-end 230 may include a low noise amplifier (low noise amplifier, LNA) 420, a switch 421, and a group of filters (for example, filters 422a and 422b in the figure). The transmit link and the receive link are connected to the antenna through a radio frequency switch (switch) 430.

The power amplifier 410 may amplify a radio frequency signal on the transmit channel, so that the signal is fed to the antenna for transmission, thereby implementing a wireless communication function. The low noise amplifier 420 may amplify a weak radio frequency signal received by the antenna, and minimize introduction of noise, to implement effect of a better signal, better call quality, and a higher data transmission rate on the communication apparatus.

The filters (412a, 412b, 422a, 422b, and the like) may retain a signal in a specific frequency band, and filter out a signal outside the specific frequency band, thereby improving anti-interference performance and a signal-to-noise ratio of the signal. Different filters have different parameters, to adapt to requirements of different wireless communication standards. For example, the parameters may include a center frequency (center frequency), a cut-off frequency (cutoff frequency), a passband bandwidth, and the like. This is not limited in this application.

Optionally, the filter may be an inductor-capacitor filter (LC filter), a surface acoustic wave (surface acoustic wave, SAW) filter, a bulk acoustic (bulk acoustic wave, BAW) filter, or the like. This is not limited in this application.

The radio frequency switch 430 may connect any one or more of a plurality of radio frequency signals through control logic, to implement switching between different signal paths, including switching between the receive link and the transmit link, switching between different frequency bands, and the like. This achieves an objective of sharing an antenna and reducing hardware costs. Optionally, the radio frequency switch 430 may be a mobile communication conduction switch, a Wi-Fi switch, an antenna tuning switch, or the like. This is not limited in this application.

The radio frequency front-end 230 may further include a control unit 440. The control unit 440 may be connected to one or more of the following components: the power amplifier 410, the low noise amplifier 420, the switch 411, the switch 421, and the radio frequency switch 430.

Optionally, the control unit 440 may set a parameter of the power amplifier 410, or adjust the power amplifier 410 based on a control signal from the first communication processor 220a.

Optionally, the control unit 440 may set a parameter of the low noise amplifier 420, or adjust the low noise amplifier 420 based on a control signal from the first communication processor 220a.

Optionally, the control unit 440 may control, based on a control signal from the first communication processor 220a, the switch 411 to connect the power amplifier 410 and one of a group of filters such as the filters 412a and 412b.

Optionally, the control unit 440 may control, based on a control signal from the first communication processor 220a, the switch 421 to connect the low noise amplifier 420 and one of a group of filters such as the filters 422a and 422b.

Optionally, the control unit 440 may control the radio frequency switch 430 based on control signal from the first communication processor 220a, for example, may control the radio frequency switch 430 to switch between different signal paths or between different frequency bands.

Based on a control operation performed by the control unit 440 on a related component in the radio frequency front-end 230, the radio frequency front-end 230 may be configured to be in a communication state matching a wireless communication standard that corresponds to a wireless communication service enabled on the communication apparatus.

For example, if the control signal received by the control unit 440 from the first communication processor 220a indicates to configure the radio frequency front-end to be in a 5G cellular communication state, the control unit 440 obtains configuration information corresponding to the 5G cellular communication state. For example, the configuration information includes parameters such as the parameter of the power amplifier, the parameter of the low noise amplifier, identifiers of the filters, and a signal frequency band. In addition, the control unit 440 adjusts the power amplifier 410 based on the obtained parameter of the power amplifier, adjusts the low noise amplifier 420 based on the obtained parameter of the low noise amplifier, controls the switches (411 and 412) based on the obtained identifiers of the filters to connect corresponding filters and amplifiers (for example, including connecting the filter and the power amplifier 410 in the transmit link, and connecting the filter and the low noise amplifier 420 in the receive link), and controls, based on the obtained signal frequency band, the radio frequency switch 430 to switch to a corresponding frequency band. In this way, the radio frequency front-end 230 is configured to be in the communication state matching 5G cellular communication.

For another example, if the control signal received by the control unit 440 from the first communication processor 220a indicates to configure the radio frequency front-end to be in a satellite communication state, the control unit 440 obtains configuration information corresponding to the satellite communication state, and configures a related component in the radio frequency front-end 230 based on the obtained configuration information. In this way, the radio frequency front-end 230 is configured to be in the communication state matching satellite communication. For a specific configuration method, refer to a method of configuring the radio frequency front-end 230 to be in the communication state matching 5G cellular communication.

For another example, if the control signal received by the control unit 440 from the first communication processor 220a indicates to configure the radio frequency front-end to be in a short-range communication state, the control unit 440 obtains configuration information corresponding to the short-range communication state, and configures a related component in the radio frequency front-end 230 based on the obtained configuration information. In this way, the radio frequency front-end 230 is configured to be in the communication state matching short-range communication. For a specific configuration method, refer to a method of configuring the radio frequency front-end 230 to be in the communication state matching 5G cellular communication.

For still another example, if the control signal received by the control unit 440 from the first communication processor 220a indicates to configure the radio frequency front-end to be in a communication state in which 5G cellular communication and short-range communication coexist (this is represented as "5G cellular+short-range"), the control unit 440 obtains configuration information corresponding to the "5G cellular+short-range" communication state, and configures a related component in the radio frequency front-end 230 based on the obtained configuration information. In this way, the radio frequency front-end 230 is configured to be in the communication state matching "5G cellular+short-range". For a specific configuration method, refer to a method of configuring the radio frequency front-end 230 to be in the communication state matching 5G cellular communication.

Optionally, the radio frequency front-end 230 may store configuration information corresponding to various communication states, which is used to configure a communication state of the radio frequency front-end 230 based on a communication state indicated by the first communication processor and based on corresponding configuration information.

In a possible implementation, the control unit 440 may adjust or set one or more of the following parameters of the power amplifier 410 and/or the low noise amplifier 420: a bias voltage, a bias current, and the like. The control unit 440 may adjust characteristics such as a working frequency range and a gain of the amplifier 410 and/or the low noise amplifier 420 by adjusting the bias voltage, the bias current, and the like.

In a possible implementation, the control unit 440 may further control, based on the control signal from the first communication processor 220a, the radio frequency front-end 230 to be in a sleep state. When the radio frequency front-end is in the sleep state, some or all of active components (such as the power amplifier and the low noise amplifier) in the radio frequency front-end are powered off or are in a low power consumption state. This can reduce power consumption of the radio frequency front-end.

In another possible implementation, the control unit 440 may alternatively control, based on the control signal from the first communication processor 220a, the radio frequency front-end 230 to be powered off, so that the radio frequency front-end 230 is in an off state. This reduces power consumption of the communication apparatus.

It should be understood that the radio frequency front-end shown in FIG. 4 may further include other components, such as an antenna tuner (tuner) and a duplexer/multiplexer (duplexer/multiplexer). This is not limited in this application. The antenna tuner may enable impedance matching between a transmitter and the antenna, so that the antenna has a maximum radiated power at any frequency. The duplexer/multiplexer is also referred to as an antenna sharing device, may integrate a plurality of filters inside, and may isolate a transmit signal from a receive signal, to ensure that both the receive link and the transmit link can work normally.

It should be understood that FIG. 4 shows an example structure of the radio frequency front-end according to an embodiment of this application. A structure of the radio frequency front-end is not limited in this application.

In a possible implementation, the first communication processor 220a may further send a control signal to the antenna 240 based on a control signal received from the application processor 210, and the control signal is used to configure the antenna 240. For example, the antenna 240 may be configured to be in the state matching cellular communication, or configured to be in the state matching short-range communication, or configured to be in the state matching satellite communication. This is not limited in this application.

In a possible implementation, the first communication processor 220a may further send a control signal to the power module 250 based on a control signal received from the application processor 210. The control signal is used to control the power module 250 to supply power to the radio frequency front-end 230 or not to supply power to the radio frequency front-end 230. If the power module 250 does not supply power to the radio frequency front-end 230, the radio frequency front-end 230 enters the off state.

Based on the communication apparatus shown in FIG. 2, an example in which the first communication processor, the second communication processor, and the third communication processor are respectively the cellular communication processor, the short-range communication processor, and the satellite communication processor is used. An example of the communication apparatus may be shown in FIG. 5.

In the communication apparatus 200 shown in FIG. 2 in this embodiment of this application, because a plurality of communication processors that correspond to a plurality of wireless communication standards may reuse one radio frequency front-end, hardware redundancy can be reduced, and hardware utilization can be improved compared with the communication apparatus 100 shown in FIG. 1. Compared with the communication apparatus 100 shown in FIG. 1, when the communication apparatus 200 in this embodiment of this application simultaneously can reduce power consumption when simultaneously using several wireless communication standards.

Based on the structure and functions of the communication apparatus shown in FIG. 2, when determining to enable or disable a wireless communication service, the application processor indicates the first communication processor to configure the radio frequency front-end according to a wireless communication standard that corresponds to the wireless communication service, and controls a running status of a corresponding communication processor of the N communication processors according to the wireless communication standard that corresponds to the wireless communication service. Correspondingly, the first communication processor indicates, according to an indication of the application processor, the radio frequency front-end to be configured to be in a communication state matching the wireless communication standard that corresponds to the wireless communication service, or be configured to be in the sleep state or the off state. The radio frequency front-end is configured, according to an indication of the first communication processor, to be in the communication state matching the wireless communication standard that corresponds to the wireless communication service, the sleep state, or the off state.

Enabling a wireless communication service is used as an example. When the wireless communication service is enabled, the application processor 210 may sense the event, and may send a control signal to the first communication processor based on the event, to indicate the first communication processor to configure the communication state of the radio frequency front-end, so that the communication state of the radio frequency front-end matches a wireless communication standard that corresponds to the wireless communication service. Similarly, when the wireless communication service is disabled, the application processor 210 may sense the event, and may send a control signal to the first communication processor based on the event, to indicate the first communication processor to configure the communication state of the radio frequency front-end, so that the communication state of the radio frequency front-end matches a wireless communication standard currently used by the communication apparatus, or the radio frequency front-end sleeps or is turned off when the communication apparatus currently has no wireless communication service.

Optionally, the wireless communication service may include a cellular communication service, for example, a cellular mobile call service.

Optionally, the wireless communication service may include a short-range communication service, for example, a wireless local area network (wireless local area network, WLAN) service, and specifically, a Wi-Fi service.

Optionally, the wireless communication service may include a satellite communication service, for example, a satellite mobile call service.

It should be understood that the "wireless communication service" in embodiments of this application may also be understood as a wireless communication function. For example, enabling a wireless communication service may be understood as enabling cellular communication, enabling short-range communication, enabling satellite communication, or the like. Disabling the wireless communication service may be understood as disabling cellular communication, disabling short-range communication, or disabling satellite communication.

In a possible implementation, the application processor may determine, based on a situation in which a user uses a wireless communication service, to enable or disable a corresponding wireless communication service. The cellular mobile call service is used as an example. When a user makes a call by using a mobile phone, the application processor may determine to enable the cellular mobile call service. When the user ends the call, the application processor may determine to disable the cellular mobile call service. The Wi-Fi service is used as another example. In a case in which a mobile phone is connected to Wi-Fi, when a user starts a network video application on the mobile phone, the application processor may determine to enable the Wi-Fi service. When the user closes the network video application, the application processor may determine to disable the Wi-Fi service.

In a possible implementation, the application processor may determine, based on a user's request of enabling or disabling a wireless communication service, to enable or disable a corresponding wireless communication service. For example, enabling or disabling Wi-Fi on a mobile phone is used as an example. The user may enable Wi-Fi or disable Wi-Fi in a quick user operation manner provided by the mobile phone (for example, performing a downward swipe operation on a home screen to display a function button for enabling or disabling Wi-Fi by the user), perform a user operation on a system settings interface provided by the mobile phone to enable or disable Wi-Fi, or enable or disable Wi-Fi in a voice manner. When the user performs the operation of enabling Wi-Fi, the application processor may determine to enable the Wi-Fi service. When the user performs the operation of disabling Wi-Fi, the application processor may determine to disable the W-Fi service.

In a possible implementation, when the communication apparatus is powered on, the application processor of the communication apparatus may determine, based on power-on configuration information of the communication apparatus or based on a wireless communication standard enabled before the communication apparatus is powered off last time, to enable a corresponding wireless communication standard. For example, if the power-on configuration information of the communication apparatus indicates to enable cellular wireless communication and Wi-Fi, when the wireless communication apparatus is powered on, the application processor determines to enable cellular communication and Wi-Fi communication.

In a possible implementation, when the communication apparatus enters a sleep state, a radio resource control (radio resource control, RRC) idle state, or a power saving mode, for example, when a screen of a mobile phone is off, the application processor may determine to disable a wireless communication service. Correspondingly, when the communication apparatus enters a normal working state from the sleep state, the RRC idle state, or the power saving mode, for example, when the screen of the mobile phone is on, the application processor may determine to enable the wireless communication service.

The foregoing merely shows several examples of implementations in which the application processor determines to enable or disable a wireless communication service. This is not limited in embodiments of this application.

Based on the communication apparatus shown in FIG. 2, enabling a wireless communication service that corresponds to a second wireless communication standard is used as an example. When determining to enable the wireless communication service that corresponds to the second wireless communication standard, and all the N communication processors are in the sleep state, the application processor wakes up the first communication processor, indicates the first communication processor to configure the radio frequency front-end according to the second wireless communication standard, and controls the second communication processor that is of the N communication processors and that corresponds to the second wireless communication standard to enter a working state. Correspondingly, the first communication processor indicates, according to the indication of the application processor, the radio frequency front-end to be configured to be in a communication state matching the second wireless communication standard, and enters the sleep state after indicating the radio frequency front-end to be configured to be in the communication state corresponding to the second wireless communication standard.

Optionally, when determining to disable the wireless communication service that corresponds to the second wireless communication standard, the application processor controls the second communication processor to enter the sleep state, wakes up the first communication processor, and indicates the first communication processor to configure the radio frequency front-end to be in the sleep state or the off state. Correspondingly, the first communication processor indicates, according to the indication of the application processor, the radio frequency front-end to be configured to be in the sleep state or the off state, and enters the sleep state after indicating the radio frequency front-end to be configured to be in the sleep state or the off state.

Although the foregoing implementation processes are described by using the wireless communication service that corresponds to the second wireless communication standard as an example, it should be understood that the foregoing implementation processes may be applicable to an enabling process and a disabling process of a wireless communication service that corresponds to another wireless communication standard.

An example in which the second wireless communication standard is short-range communication is used. Based on the communication apparatus shown in FIG. 5, FIG. 6a-1 and FIG. 6a-2 show an example of a procedure of enabling a short-range communication service, and FIG. 6b shows an example of a procedure of disabling the short-range communication service. The cellular communication processor is configured as the main control communication processor, and is configured to control the status of the radio frequency front-end.

As shown in FIG. 6a-1 and FIG. 6a-2, the procedure of enabling the short-range communication service may include the following steps.

Step 600: The application processor determines to enable the short-range communication service. For a specific implementation of this step, refer to the foregoing related content.

Step 601: The application processor sends a control signal (or referred to as a control instruction) to the cellular communication processor, where the control signal indicates the cellular communication processor to configure the radio frequency front-end according to the short-range communication standard, that is, configure the radio frequency front-end based on short-range communication.

Optionally, the control signal has a function of briefly waking up the cellular communication processor, or in other words, the control signal may wake up the cellular communication processor, and indicate the cellular communication processor to enter the sleep state after the radio frequency front-end is configured.

Optionally, if the application processor determines that the radio frequency front-end is currently in the sleep state, the control signal may indicate to first activate the radio frequency front-end, and then configure the communication state of the device front-end. That is, the control signal further has a function of indicating the cellular communication processor to wake up the radio frequency front-end.

Step 602: After receiving the control signal, the cellular communication processor enters the working state.

Step 603: The cellular communication processor sends a control signal to the power module, where the control signal is used to control the power module to supply power to the radio frequency front-end. This step is an optional step.

Optionally, if the control signal received by the cellular communication processor has the function of indicating to wake up the radio frequency front-end, in response to the control signal, the cellular communication processor sends the control signal to the power module.

Optionally, the status of the radio frequency front-end is controlled by the cellular communication processor, and the status of the radio frequency front-end is known to the cellular communication processor. Therefore, if determining that the radio frequency front-end is currently in the sleep state, the cellular communication processor may send the control signal to the power module, so that the radio frequency front-end enters the working state.

Step 604: The cellular communication processor sends a control signal to the radio frequency front-end, where the control signal indicates the radio frequency front-end to be configured to be in a short-range communication state.

Optionally, if step 603 is not performed, that is, the cellular communication processor does not send the control signal to the power module, the control signal sent by the cellular communication processor in step 604 to the radio frequency front-end further has the function of waking up the radio frequency front-end, and the radio frequency front-end may enter the working state from the sleep state based on the control signal and may be configured to be in the short-range communication state.

Step 605: After receiving the control signal, the radio frequency front-end is configured to be in the short-range communication state according to an indication of the control signal. For a specific implementation of this step, refer to the foregoing related content.

Step 606: The radio frequency front-end returns a response to the cellular communication processor, to notify that the short-range communication state is successfully configured. This step is an optional step.

Step 607: After receiving the response, the cellular communication processor sends a response to the application processor, to notify that the radio frequency front-end is configured to be in the short-range communication state. This step is an optional step.

Step 608: The cellular communication processor enters the sleep state.

Step 609: The application processor sends a control signal to the short-range communication processor, where the control signal indicates to enable short-range communication, or the control signal is used to wake up the short-range communication processor.

Optionally, after receiving the response in step 607, the application processor may send the control signal to the short-range communication processor.

Optionally, the application processor may send the control signal to the short-range communication processor after sensing that the cellular communication processor enters the sleep state (for example, sensing that the cellular communication processor is powered off).

Optionally, the application processor may perform step 609 after specified duration by using a moment at which step 601 is performed as a start point. The specified duration may be set based on a time length required for the cellular communication processor to enter the working state from the sleep state, and a time length required for the radio frequency front-end to enter the working state and to be configured to be in the short-range communication state, to ensure that the short-range communication processor is woken up after the radio frequency front-end is configured to be in the short-range communication state.

Step 610: After receiving the control signal, the short-range communication processor enters the working state.

Step 611: The short-range communication processor returns a response to the application processor, to notify that the short-range communication processor enters the working state. This step is an optional step.

Then, the communication apparatus may perform the short-range communication service.

When the short-range communication service is disabled, as shown in FIG. 6b, the procedure of disabling the short-range communication service may include the following steps.

Step 620: The application processor determines to disable the short-range communication service. For a specific implementation of this step, refer to the foregoing related content.

Step 621: The application processor sends a control signal (or a control instruction) to the short-range communication processor, where the control signal indicates the short-range communication processor to enter the sleep state.

Step 622: After receiving the control signal, the short-range communication processor enters the sleep state.

Step 623: The application processor sends a control signal (or a control instruction) to the cellular communication processor, where the control signal indicates the cellular communication processor to configure the radio frequency front-end to be in the sleep state.

Optionally, the control signal further has a function of briefly waking up the cellular communication processor, or in other words, the control signal may wake up the cellular communication processor, and indicate the cellular communication processor to enter the sleep state after the radio frequency front-end is configured.

Optionally, if determining that no other wireless communication service needs to be executed after the short-range communication service is disabled, the application processor may indicate, by using the control signal, to configure the radio frequency front-end to be in the sleep state, to reduce power consumption of the communication apparatus.

Optionally, the application processor may send the control signal to the cellular communication processor after sensing that the short-range communication processor enters the sleep state (for example, sensing that the short-range communication processor is powered off).

Step 624: After receiving the control signal, the cellular communication processor enters the working state.

Step 625: The cellular communication processor sends a control signal to the radio frequency front-end, where the control signal indicates to configure the radio frequency front-end to be in the sleep state.

Step 626: The radio frequency front-end is configured to be in the sleep state based on the received control signal. For a specific implementation of this step, refer to the foregoing related content.

Step 627: The cellular communication processor enters the sleep state.

In a possible implementation, the control signal sent by the application processor in step 623 to the cellular communication processor indicates to turn off the radio frequency front-end, or indicates the cellular communication processor to configure the radio frequency front-end to be in the off state. Correspondingly, step 625 may be replaced with: The cellular communication processor sends a control signal to the radio frequency front-end, where the control signal indicates the radio frequency front-end to enter the off state. Step 626 may be replaced with: The radio frequency front-end is configured to be in the off state.

In another possible implementation, the control signal sent by the application processor in step 623 to the cellular communication processor indicates to turn off the radio frequency front-end, or indicates the cellular communication processor to configure the radio frequency front-end to be in the off state. Correspondingly, step 625 may be replaced with: The cellular communication processor sends a control signal to the power module, where the control signal indicates to stop supplying power to the radio frequency front-end. Step 626 may be replaced with: The power module stops supplying power to the radio frequency front-end based on the control signal, or no longer supplies power to the radio frequency front-end, so that the radio frequency front-end enters the off state.

It should be understood that for a wireless communication standard other than the first wireless communication standard (for example, cellular communication), an enabling process and a disabling process of a wireless communication service of the wireless communication standard may be performed with reference to the methods shown in FIG. 6a-1, FIG. 6a-2, and FIG. 6b.

Enabling the cellular communication service is used as an example. Based on the communication apparatus shown in FIG. 5, FIG. 7a shows an example of a procedure of enabling the cellular communication service, and FIG. 7b shows an example of a procedure of disabling the cellular communication service. The cellular communication processor is configured as the main control communication processor, and is configured to control the status of the radio frequency front-end.

As shown in FIG. 7a, the procedure of enabling the cellular communication service may include the following steps.

Step 700: The application processor determines to enable the cellular communication service. For a specific implementation of this step, refer to the foregoing related content.

Step 701: The application processor sends a control signal (or referred to as a control instruction) to the cellular communication processor, where the control signal indicates the cellular communication processor to configure the radio frequency front-end according to the cellular communication standard, that is, configure the radio frequency front-end based on cellular communication.

Optionally, the control signal has a function of waking up the cellular communication processor, or in other words, the control signal may wake up the cellular communication processor.

Optionally, if the application processor determines that the radio frequency front-end is currently in the sleep state, the control signal may indicate to first activate the radio frequency front-end, and then configure the communication state of the device front-end. That is, the control signal further has a function of indicating the cellular communication processor to wake up the radio frequency front-end.

Step 702: After receiving the control signal, the cellular communication processor enters the working state.

Step 703: The cellular communication processor sends a control signal to the power module, where the control signal is used to control the power module to supply power to the radio frequency front-end. This step is an optional step.

Optionally, if the control signal received by the cellular communication processor has the function of indicating to wake up the radio frequency front-end, in response to the control signal, the cellular communication processor sends the control signal to the power module.

Optionally, the status of the radio frequency front-end is controlled by the cellular communication processor, and the status of the radio frequency front-end is known to the cellular communication processor. Therefore, if determining that the radio frequency front-end is currently in the sleep state, the cellular communication processor may send the control signal to the power module, so that the radio frequency front-end enters the working state.

Step 704: The cellular communication processor sends a control signal to the radio frequency front-end, where the control signal indicates the radio frequency front-end to be configured to be in a cellular communication state.

Optionally, if step 703 is not performed, that is, the cellular communication processor does not send the control signal to the power module, the control signal sent by the cellular communication processor in step 704 to the radio frequency front-end further has the function of waking up the radio frequency front-end, and the radio frequency front-end may enter the working state from the sleep state based on the control signal and be configured to be in the cellular communication state.

Step 705: After receiving the control signal, the radio frequency front-end is configured to be in the cellular communication state according to an indication of the control signal. For a specific implementation of this step, refer to the foregoing related content.

Step 706: The radio frequency front-end returns a response to the cellular communication processor, where the response is used to notify that the cellular communication state is successfully configured. This step is an optional step.

Step 707: The cellular communication processor returns a response to the application processor, where the response is used to notify that the radio frequency front-end has been configured to be in the cellular communication state. This step is an optional step.

Then, the communication apparatus may perform the cellular communication service.

When the cellular communication service is disabled, as shown in FIG. 7b, the procedure of disabling the cellular communication service may include the following steps.

Step 710: The application processor determines to disable the cellular communication service. For a specific implementation of this step, refer to the foregoing related content.

Step 711: The application processor sends a control signal (or a control instruction) to the cellular communication processor, where the control signal indicates the cellular communication processor to configure the radio frequency front-end to be in the sleep state, and indicates the cellular communication processor to enter the sleep state.

In this step, the control signal sent by the application processor to the cellular communication processor indicates, on one hand, the cellular communication processor to configure the radio frequency front-end to be in the sleep state, and indicates, on the other hand, the cellular communication processor to enter the sleep state after the radio frequency front-end is configured.

Step 712: The cellular communication processor sends a control signal to the radio frequency front-end, where the control signal indicates that the radio frequency front-end is configured to be in the sleep state.

Step 713: The radio frequency front-end is configured to be in the sleep state based on the received control signal. For a specific implementation of this step, refer to the foregoing related content.

Step 714: The cellular communication processor enters the sleep state.

In a possible implementation, the control signal sent by the application processor in step 711 to the cellular communication processor indicates to turn off the radio frequency front-end, or indicates the cellular communication processor to configure the radio frequency front-end to be in the off state. Correspondingly, step 712 may be replaced with: The cellular communication processor sends a control signal to the radio frequency front-end, where the control signal indicates the radio frequency front-end to enter the off state. Step 713 may be replaced with: The radio frequency front-end is configured to be in the off state.

In another possible implementation, the control signal sent by the application processor in step 711 to the cellular communication processor indicates to turn off the radio frequency front-end, or indicates the cellular communication processor to configure the radio frequency front-end to be in the off state. Correspondingly, step 712 may be replaced with: The cellular communication processor sends a control signal to the power module, where the control signal indicates to stop supplying power to the radio frequency front-end. Step 713 may be replaced with: The power module stops supplying power to the radio frequency front-end based on the control signal, or no longer supplies power to the radio frequency front-end, so that the radio frequency front-end enters the off state.

Based on the communication apparatus shown in FIG. 2, in a case in which the first communication processor is in the working state (that is, in a case in which the first wireless communication standard has been enabled), when determining to enable a communication service that corresponds to a third wireless communication standard, because the third wireless communication standard and the first wireless communication standard are mutually exclusive, or the communication service that corresponds to the third wireless communication standard and the communication service that corresponds to the first wireless communication standard cannot coexist, the application processor first indicates the first communication processor to perform a graceful shutdown after the radio frequency front-end is configured to be in the sleep state or the off state, to disable the communication service that corresponds to the first wireless communication standard, then wakes up the first communication processor, indicates the first communication processor to configure the radio frequency front-end according to the third wireless communication standard, and controls the third communication processor that is of the N communication processors and that corresponds to the third wireless communication standard to enter the working state. Correspondingly, the first communication processor indicates, according to the indication of the application processing, the radio frequency front-end to be configured to be in the sleep state or the off state, performs the graceful shutdown, indicates, according to the indication of the application processor after the first communication processor is woken up by the application processor, the radio frequency front-end to be configured to be in a communication state matching the third wireless communication standard, and enters the sleep state after indicating the radio frequency front-end to be configured to be in the communication state matching the third wireless communication standard.

In a possible implementation, a process of the graceful shutdown performed by the first communication processor may include: When the first communication processor is in a state in which the power supply remains on, the application processor indicates, by using a control signal, the first communication processor to disable a wireless communication service channel that corresponds to the first wireless communication standard, and then shuts off a part or all of a power input of the first communication processor, to disable the wireless communication service that corresponds to the first wireless communication standard.

Optionally, when determining to disable the communication service that corresponds to the third wireless communication standard, the application processor controls the third communication processor to enter the sleep state, wakes up the first communication processor, and indicates a communication processor to configure the radio frequency front-end to be in the sleep state or the off state. Correspondingly, the first communication processor indicates, according to the indication of the application processor, the radio frequency front-end to be configured to be in the sleep state or the off state, and enters the sleep state after indicating the radio frequency front-end to be configured to be in the sleep state or the off state.

Although the foregoing implementation processes are described by using the wireless communication services that correspond to the first wireless communication standard and the third wireless communication standard as an example, it should be understood that the foregoing implementation processes may be applicable to an enabling process and a disabling process of wireless communication services that correspond to another two wireless communication standards.

An example in which the first wireless communication standard is cellular communication and the third wireless communication standard is satellite communication is used. Based on the communication apparatus shown in FIG. 5, FIG. 8a-1 and FIG. 8a-2 show an example of a procedure of enabling a satellite communication service, and FIG. 8b shows an example of a procedure of disabling the satellite communication service. The cellular communication processor is configured as the main control communication processor, and is configured to control the status of the radio frequency front-end.

As shown in FIG. 8a-1 and FIG. 8a-2, the procedure of enabling the short-range communication service may include the following steps.

Step 800: The application processor determines to enable the satellite communication service. For a specific implementation of this step, refer to the foregoing related content.

Step 801: The application processor sends a control signal (or referred to as a control instruction) to the cellular communication processor, where the control signal indicates the cellular communication processor to perform a graceful shutdown.

Step 802: The cellular communication processor performs the graceful shutdown based on the control signal, to disable the cellular communication service.

Step 803: The application processor sends a control signal to the cellular communication processor, where the control signal indicates the cellular communication processor to configure the radio frequency front-end to be in the satellite communication state.

Optionally, the control signal has a function of briefly waking up the cellular communication processor, or in other words, the control signal may wake up the cellular communication processor, and indicate the cellular communication processor to enter the sleep state after the radio frequency front-end is configured.

Step 804: After receiving the control signal, the cellular communication processor enters the working state.

Step 805: The cellular communication processor sends a control signal to the radio frequency front-end, where the control signal indicates the radio frequency front-end to be configured to be in the satellite communication state.

Step 806: After receiving the control signal, the radio frequency front-end is configured to be in the satellite communication state according to an indication of the control signal. For a specific implementation of this step, refer to the foregoing related content.

Step 807: The radio frequency front-end returns a response to the cellular communication processor, where the response is used to notify that the satellite communication state is successfully configured. This step is an optional step.

Step 808: After receiving the response from the radio frequency front-end, the cellular communication processor sends a response to the application processor, where the response is used to notify that the radio frequency front-end is configured to be in the satellite communication state. This step is an optional step.

Step 809: The cellular communication processor enters the sleep state.

Step 810: The application processor sends a control signal to the satellite communication processor, where the control signal indicates to enable satellite communication, or the control signal is used to wake up the satellite communication processor.

Optionally, after receiving the response in step 808, the application processor may send the control signal to the satellite communication processor.

Optionally, the application processor may send the control signal to the satellite communication processor after sensing that the cellular communication processor enters the sleep state (for example, sensing that the cellular communication processor is powered off).

Optionally, the application processor may perform step 810 after specified duration by using a moment at which step 803 is performed as a start point. The specified duration may be set based on a time length required for the cellular communication processor to enter the working state from the sleep state, and a time length required for the radio frequency front-end to be configured to be in the satellite communication state, to ensure that the satellite communication processor is woken up after the radio frequency front-end is configured to be in the satellite communication state.

Step 811: After receiving the control signal, the satellite communication processor enters the working state.

Step 812: The satellite communication processor returns a response to the application processor, where the response is used to notify that the satellite communication processor enters the working state. This step is an optional step.

Then, the communication apparatus may perform the satellite communication service.

When the satellite communication service is disabled, as shown in FIG. 8b, the procedure of disabling the satellite communication service may include the following steps.

Step 820: The application processor determines to disable the satellite communication service. For a specific implementation of this step, refer to the foregoing related content.

Step 821: The application processor sends a control signal (or a control instruction) to the satellite communication processor, where the control signal indicates the satellite communication processor to enter the sleep state.

Step 822: After receiving the control signal, the satellite communication processor enters the sleep state.

Step 823: The application processor sends a control signal (or a control instruction) to the cellular communication processor, where the control signal indicates the cellular communication processor to configure the radio frequency front-end to be in the sleep state.

Optionally, the control signal further has a function of briefly waking up the cellular communication processor, or in other words, the control signal may wake up the cellular communication processor, and indicate the cellular communication processor to enter the sleep state after the radio frequency front-end is configured.

Optionally, if determining that no other wireless communication service needs to be executed after the satellite communication service is disabled, the application processor may indicate, by using the control signal, to configure the radio frequency front-end to be in the sleep state, to reduce power consumption of the communication apparatus.

Step 824: After receiving the control signal, the cellular communication processor enters the working state.

Step 825: The cellular communication processor sends a control signal to the radio frequency front-end, where the control signal indicates to configure the radio frequency front-end to be in the sleep state.

Step 826: The radio frequency front-end is configured to be in the sleep state based on the received control signal. For a specific implementation of this step, refer to the foregoing related content.

Step 827: The cellular communication processor enters the sleep state.

In a possible implementation, the control signal sent by the application processor in step 823 to the cellular communication processor indicates to turn off the radio frequency front-end, or indicates the cellular communication processor to configure the radio frequency front-end to be in the off state. Correspondingly, step 825 may be replaced with: The cellular communication processor sends a control signal to the radio frequency front-end, where the control signal indicates the radio frequency front-end to enter the off state. Step 826 may be replaced with: The radio frequency front-end is configured to be in the off state.

In another possible implementation, the control signal sent by the application processor in step 823 to the cellular communication processor indicates to turn off the radio frequency front-end, or indicates the cellular communication processor to configure the radio frequency front-end to be in the off state. Correspondingly, step 825 may be replaced with: The cellular communication processor sends a control signal to the power module, where the control signal indicates to stop supplying power to the radio frequency front-end. Step 826 may be replaced with: The power module stops supplying power to the radio frequency front-end based on the control signal, or no longer supplies power to the radio frequency front-end, so that the radio frequency front-end enters the off state.

It should be understood that for another wireless communication standard that is mutually exclusive with the first wireless communication standard (for example, cellular communication), an enabling process and a disabling process of a communication service of the wireless communication standard may be performed with reference to the methods shown in FIG. 8a-1, FIG. 8a-2, and FIG. 8b.

Based on the communication apparatus shown in FIG. 2, in a case in which the first communication processor is in the working state (that is, in a case in which the first wireless communication standard has been enabled), when determining to enable a communication service that corresponds to a second wireless communication standard, the application processor indicates the first communication processor to configure the radio frequency front-end according to the first wireless communication standard and the second wireless communication standard, and controls the second communication processor that is of the N communication processors and that corresponds to the second wireless communication standard to enter the working state. Correspondingly, the first communication processor indicates, according to the indication of the application processing, the radio frequency front-end to be configured to be in a communication state matching the first wireless communication standard and the second wireless communication standard.

Optionally, when determining to disable the communication service that corresponds to the second wireless communication standard, the application processor controls the second communication processor to enter the sleep state, and indicates the first communication processor to configure the radio frequency front-end to be in a communication state matching the first wireless communication standard. Correspondingly, the first communication processor indicates, according to the indication of the application processor, the radio frequency front-end to be configured to be in the communication state matching the first wireless communication standard.

An example in which the first wireless communication standard is cellular communication and the second wireless communication standard is short-range communication is used. Based on the communication apparatus shown in FIG. 5, FIG. 9a shows an example of a procedure of enabling short-range communication when cellular communication is enabled, and FIG. 9b shows an example of a procedure of disabling the short-range communication service. The cellular communication processor is configured as the main control communication processor, and is configured to control the status of the radio frequency front-end.

As shown in FIG. 9a, the procedure of enabling the short-range communication service may include the following steps.

Step 900: The application processor determines to enable the short-range communication service. For a specific implementation of this step, refer to the foregoing related content.

Step 901: The application processor sends a control signal to the cellular communication processor, where the control signal indicates the cellular communication processor to configure the radio frequency front-end to be in a communication state matching cellular communication and short-range communication. In this embodiment of this application, the communication state is referred to as a "cellular+short-range" communication state.

Step 902: The cellular communication processor sends a control signal to the radio frequency front-end, where the control signal indicates the radio frequency front-end to be configured to be in the "cellular+short-range" communication state.

Step 903: After receiving the control signal, the radio frequency front-end is configured to be in the "cellular+short-range" communication state according to an indication of the control signal. For a specific implementation of this step, refer to the foregoing related content.

Step 904: The radio frequency front-end returns a response to the cellular communication processor, where the response is used to notify that the "cellular+short-range" communication state is successfully configured. This step is an optional step.

Step 905: The cellular communication processor returns a response to the application processor, where the response is used to notify that the radio frequency front-end has been configured to be in the "cellular+short-range" communication state. This step is an optional step.

Step 906: The application processor sends a control signal to the short-range communication processor, where the control signal indicates to enable short-range communication, or the control signal is used to wake up the short-range communication processor.

Optionally, after receiving the response in step 905, the application processor may send the control signal to the short-range communication processor.

Optionally, the application processor may perform step 906 after specified duration by using a moment at which step 901 is performed as a start point. The specified duration may be set based on a time length required for the radio frequency front-end to be configured to be in the "cellular+short-range" communication state, to ensure that the satellite communication processor is woken up after the radio frequency front-end is configured to be in the "cellular+short-range" communication state.

Step 907: After receiving the control signal, the short-range communication processor enters the working state.

Step 908: The short-range communication processor returns a response to the application processor, where the response is used to notify that the short-range communication processor enters the working state. This step is an optional step.

Then, the communication apparatus may perform the short-range communication service.

When the short-range communication service is disabled, as shown in FIG. 9b, the procedure of disabling the short-range communication service may include the following steps.

Step 910: The application processor determines to disable the short-range communication service. For a specific implementation of this step, refer to the foregoing related content.

Step 911: The application processor sends a control signal (or a control instruction) to the short-range communication processor, where the control signal indicates the short-range communication processor to enter the sleep state.

Step 912: After receiving the control signal, the short-range communication processor enters the sleep state.

Step 913: The application processor sends a control signal (or a control instruction) to the cellular communication processor, where the control signal indicates the cellular communication processor to configure the radio frequency front-end to be in a cellular communication state.

Step 914: The cellular communication processor sends a control signal to the radio frequency front-end, where the control signal indicates the radio frequency front-end to be configured to be in the cellular communication state.

Step 915: The radio frequency front-end is configured to be in the cellular communication state based on the received control signal. For a specific implementation of this step, refer to the foregoing related content.

Step 916: The radio frequency front-end returns a response to the cellular communication processor. This step is optional.

Step 917: After receiving the response of the radio frequency front-end, the cellular communication processor returns a response to the application processor. This step is optional.

It should be understood that for another wireless communication standard that may coexist with the first wireless communication standard (for example, cellular communication), an enabling process and a disabling process of a communication service of the wireless communication standard may be performed with reference to the methods shown in FIG. 9a and FIG. 9b.

It may be understood that to implement the functions in the foregoing embodiments, a network device and a terminal device include corresponding hardware structures and/or software modules for performing the functions. A person skilled in the art should be easily aware that this application can be implemented by hardware or a combination of hardware and computer software in combination with the units and the method steps in the examples described in embodiments disclosed in this application. Whether a function is performed by hardware or hardware driven by computer software depends on particular application scenarios and design constraints of the technical solutions.

FIG. 10 and FIG. 11 are diagrams of possible structures of communication apparatuses according to embodiments of this application. The communication apparatuses may be configured to implement functions of the application processors in the communication apparatuses in the foregoing method embodiments, and therefore can also implement beneficial effects of the foregoing method embodiments.

As shown in FIG. 10, a communication apparatus 1000 includes a processing unit 1010 and a transceiver unit 1020. The communication apparatus 1000 is configured to implement functions of the application processor in the method embodiment shown in FIG. 7a, FIG. 7b, FIG. 8a-1 and FIG. 8a-2, FIG. 8b, FIG. 9a, or FIG. 9b.

When the application processor is configured to implement a function of the application processor in the method embodiments of this application, the processing unit 1010 determines to enable or disable a wireless communication service, indicates, through the transceiver unit 1020, a first communication processor to configure a radio frequency front-end according to a wireless communication standard that corresponds to the wireless communication service, and controls, through the transceiver unit 1020, a running status of a corresponding communication processor of the N communication processors according to the wireless communication standard that corresponds to the wireless communication service.

For more detailed descriptions of the processing unit 1010 and the transceiver unit 1020, directly refer to the related descriptions in the method embodiment shown in FIG. 7a, FIG. 7b, FIG. 8a-1 and FIG. 8a-2, FIG. 8b, FIG. 9a, or FIG. 9b. Details are not described herein again.

As shown in FIG. 11, a communication apparatus 1100 includes a processor 1110 and an interface circuit 1120. The processor 1110 and the interface circuit 1120 are coupled to each other. It may be understood that the interface circuit 1120 may be a transceiver or an input/output interface. Optionally, the communication apparatus 1100 may further include a memory 1130, configured to store instructions executed by the processor 1110, or store input data required by the processor 1110 to run instructions, or store data generated after the processor 1110 runs instructions. Optionally, the processor 1110 and the memory 1130 may be integrated together.

When the communication apparatus 1100 is configured to implement the method shown in FIG. 7a, FIG. 7b, FIG. 8a-1 and FIG. 8a-2, FIG. 8b, FIG. 9a, or FIG. 9b, the processor 1110 is configured to implement a function of the processing unit 1010, and the interface circuit 1120 is configured to implement a function of the transceiver unit 1020.

When the communication apparatus is a chip used in an application processor, the chip is configured to implement functions of the application processor in the foregoing method embodiments. The chip receives information from a communication processor, or the chip sends information to a communication processor.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or may be any regular processor.

This application provides another example of a communication apparatus. The communication apparatus includes at least one processor and at least one memory. The at least one processor is coupled to the at least one memory. The at least one memory is configured to store instructions. When the instructions are executed by the at least one processor, the communication apparatus is enabled to perform the method in the foregoing embodiments. An example in which the communication apparatus includes a processor and a memory is used. As shown in FIG. 11, the communication apparatus 1100 includes a processor 1110 and a memory 1130. The processor 1110 is coupled to the memory 1130. The memory 1130 stores instructions. When the instructions stored in the memory 1130 are executed by the processor 1110, the communication apparatus 1100 performs the method performed by the terminal device or the network device in the foregoing embodiments. Optionally, the processor 1110 and the memory 1130 may be integrated together.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or a storage medium in any other form well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a network device or a terminal. Alternatively, the processor and the storage medium may exist in a network device or a terminal as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, the procedures or functions in embodiments of this application are all or partially performed. The computer may be a general-purpose computer, a dedicated computer, a computer network, a network device, user equipment, or another programmable apparatus. The computer programs or the instructions may be stored in a computer-readable storage medium or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible to a computer, or a data storage device, such as a server or a data center, integrating one or more usable media. The usable medium may be a magnetic medium, for example, a floppy disk, a hard disk, or a magnetic tape, or may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may represent: including A, including B, including C, including A and B, including A and C, including B and C, and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication apparatus, comprising an application processor, a radio frequency front-end, and N communication processors that are separately connected to the application processor and the radio frequency front-end, wherein the N communication processors one-to-one correspond to N wireless communication standards, each of the N communication processors is configured to: process a signal from the application processor according to a corresponding wireless communication standard and then send a processed signal to the radio frequency front-end, or process a signal from the radio frequency front-end and then send a processed signal to the application processor, the N communication processors comprise a first communication processor, the first communication processor corresponds to a first communication standard, and N is an integer greater than 1;
the application processor is configured to: when determining to enable or disable a wireless communication service, indicate the first communication processor to configure the radio frequency front-end according to a wireless communication standard that corresponds to the wireless communication service, and control a running status of a corresponding communication processor of the N communication processors according to the wireless communication standard that corresponds to the wireless communication service;
the first communication processor is configured to indicate, according to an indication of the application processor, the radio frequency front-end to be configured to be in a communication state matching the wireless communication standard that corresponds to the wireless communication service, or to be configured to be in a sleep state or an off state; and
the radio frequency front-end is configured to be configured, according to an indication of the first communication processor, to be in the communication state matching the wireless communication standard that corresponds to the wireless communication service, the sleep state, or the off state.

2. The communication apparatus according to claim 1, wherein
the application processor is specifically configured to: when determining to enable a wireless communication service that corresponds to a second wireless communication standard, and the N communication processors are all in a sleep state, wake up the first communication processor, indicate the first communication processor to configure the radio frequency front-end according to the second wireless communication standard, and control a second communication processor that is of the N communication processors and that corresponds to the second wireless communication standard to enter a working state; and
the first communication processor is specifically configured to: indicate, according to the indication of the application processor, the radio frequency front-end to be configured to be in a communication state matching the second wireless communication standard, and enter the sleep state after indicating the radio frequency front-end to be configured to be in the communication state corresponding to the second wireless communication standard.

3. The communication apparatus according to claim 2, wherein
the application processor is further configured to: when determining to disable the wireless communication service that corresponds to the second wireless communication standard, control the second communication processor to enter the sleep state, wake up the first communication processor, and indicate the first communication processor to configure the radio frequency front-end to be in the sleep state or the off state; and
the first communication processor is further configured to: indicate, according to the indication of the application processor, the radio frequency front-end to be configured to be in the sleep state or the off state, and enter the sleep state after indicating the radio frequency front-end to be configured to be in the sleep state or the off state.

4. The communication apparatus according to any one of claims 1 to 3, wherein
the application processor is specifically configured to: when determining to enable the communication service that corresponds to the second wireless communication standard, and the first communication processor is in the working state, indicate the first communication processor to configure the radio frequency front-end according to the first wireless communication standard and the second wireless communication standard, and control the second communication processor that is of the N communication processors and that corresponds to the second wireless communication standard to enter the working state; and
the first communication processor is specifically configured to indicate, according to the indication of the application processorprocessing, the radio frequency front-end to be configured to be in a communication state matching the first wireless communication standard and the second wireless communication standard.

5. The communication apparatus according to claim 4, wherein
the application processor is further configured to: when determining to disable the communication service that corresponds to the second wireless communication standard, control the second communication processor to enter the sleep state, and indicate the first communication processor to configure the radio frequency front-end to be in a communication state matching the first wireless communication standard; and
the first communication processor is further configured to indicate, according to the indication of the application processor, the radio frequency front-end to be configured to be in the communication state matching the first wireless communication standard.

6. The communication apparatus according to any one of claims 2 to 5, wherein the
first wireless communication standard is a terrestrial network communication standard, and the first communication processor is a terrestrial network communication processor; and
the second wireless communication standard is a short-range communication standard, and the second communication processor is a short-range communication processor.

7. The communication apparatus according to any one of claims 1 to 6, wherein
the application processor is specifically configured to: when determining to enable a communication service that corresponds to a third wireless communication standard, and the first communication processor is in the working state, first indicate the first communication processor to perform a graceful shutdown after the radio frequency front-end is configured to be in the sleep state or the off state, then wake up the first communication processor, indicate the first communication processor to configure the radio frequency front-end according to the third wireless communication standard, and control a third communication processor that is of the N communication processors and that corresponds to the third wireless communication standard to enter the working state; and
the first communication processor is specifically configured to: indicate, according to the indication of the application processing, the radio frequency front-end to be configured to be in the sleep state or the off state, perform the graceful shutdown, indicate, according to the indication of the application processor after the first communication processor is woken up by the application processor, the radio frequency front-end to be configured to be in a communication state matching the third wireless communication standard, and enter the sleep state after indicating the radio frequency front-end to be configured to be in the communication state matching the third wireless communication standard.

8. The communication apparatus according to claim 7, wherein
the application processor is further configured to: when determining to disable the communication service that corresponds to the third wireless communication standard, control the third communication processor to enter the sleep state, wake up the first communication processor, and indicate the first communication processor to configure the radio frequency front-end to be in the sleep state or the off state; and
the first communication processor is further configured to: indicate, according to the indication of the application processor, the radio frequency front-end to be configured to be in the sleep state or the off state, and enter the sleep state after indicating the radio frequency front-end to be configured to be in the sleep state or the off state.

9. The communication apparatus according to claim 7 or 8, wherein the first
wireless communication standard is the terrestrial network communication standard, and the first communication processor is the terrestrial network communication processor; and
the third wireless communication standard is a satellite communication standard, and the third communication processor is a satellite communication processor.

10. The communication apparatus according to any one of claims 1 to 9, further
comprising a power module configured to supply power to the radio frequency front-end, wherein
the first communication processor is further configured to send a control signal to the power module, and the control signal is used to control the power module to stop supplying power to the radio frequency front-end; or
the first communication processor is specifically configured to send a control signal to the radio frequency front-end, and the control signal indicates the radio frequency front-end to disconnect from the power module.

11. A communication method, applied to a communication apparatus, wherein the communication apparatus comprises an application processor, a radio frequency front-end, and N communication processors that are separately connected to the application processor and the radio frequency front-end, the N communication processors one-to-one correspond to N wireless communication standards, the N communication processors comprise a first communication processor, the first communication processor corresponds to a first communication standard, and N is an integer greater than 1; and
the method comprises:
determining, by the application processor, to enable or disable a wireless communication service;
indicating, by the application processor, the first communication processor to configure the radio frequency front-end according to a wireless communication standard that corresponds to the wireless communication service; and
controlling, by the application processor, a running status of a corresponding communication processor of the N communication processors according to the wireless communication standard that corresponds to the wireless communication service.

12. The method according to claim 11, wherein if the application processor determines to enable a wireless communication service that corresponds to a second wireless communication standard, and the N communication processors are all in a sleep state, indicating, by the application processor, the first communication processor to configure the radio frequency front-end according to the wireless communication standard that corresponds to the wireless communication service comprises:
waking up, by the application processor, the first communication processor, and indicating the first communication processor to configure the radio frequency front-end according to the second wireless communication standard; and
controlling, by the application processor, the running status of the corresponding communication processor of the N communication processors according to the wireless communication standard that corresponds to the wireless communication service comprises:
controlling, by the application processor, a second communication processor that is of the N communication processors and that corresponds to the second wireless communication standard to enter a working state.

13. The method according to claim 12, wherein when the application processor determines to disable the wireless communication service that corresponds to the second wireless communication standard, the method further comprises:
controlling, by the application processor, the second communication processor to enter the sleep state; and
waking up, by the application processor, the first communication processor, and indicating the first wireless communication processor to configure the radio frequency front-end to be in a sleep state or an off state.

14. The method according to any one of claims 11 to 13, wherein if the application processor determines to enable the wireless communication service that corresponds to the second wireless communication standard, and the first communication processor is in the working state, indicating, by the application processor, the first communication processor to configure the radio frequency front-end according to the wireless communication standard that corresponds to the wireless communication service comprises:
indicating, by the application processor, the first communication processor to configure the radio frequency front-end according to the first wireless communication standard and the second wireless communication standard; and controlling, by the application processor, the running status of the corresponding communication processor of the N communication processors according to the wireless communication standard that corresponds to the wireless communication service comprises:
controlling, by the application processor, the second communication processor that is of the N communication processors and that corresponds to the second wireless communication standard to enter the working state.

15. The method according to claim 14, wherein when the application processor determines to disable the communication service that corresponds to the second wireless communication standard, the method further comprises:
controlling, by the application processor, the second communication processor to enter the sleep state; and
indicating, by the application processor, the first wireless communication processor to configure the radio frequency front-end to be in a communication state matching the first wireless communication standard.

16. The method according to any one of claims 11 to 15, wherein if the application processor determines to enable a wireless communication service that corresponds to a third wireless communication standard, and the first communication processor is in the working state, indicating, by the application processor, the first communication processor to configure the radio frequency front-end according to the wireless communication standard that corresponds to the wireless communication service comprises:
indicating, by the application processor, the first communication processor to perform a graceful shutdown after the radio frequency front-end is configured to be in the sleep state or the off state; and
waking up, by the application processor, the first communication processor, and indicating the first communication processor to configure the radio frequency front-end according to the third wireless communication standard; and
controlling, by the application processor, the running status of the corresponding communication processor of the N communication processors according to the wireless communication standard that corresponds to the wireless communication service comprises:
controlling, by the application processor, a third communication processor that is of the N communication processors and that corresponds to the third wireless communication standard to enter the working state.

17. The method according to claim 16, wherein when the application processor determines to disable the communication service that corresponds to the third wireless communication standard, the method further comprises:
controlling, by the application processor, the third communication processor to enter the sleep state; and
waking up, by the application processor, the first wireless communication processor, and indicating the first wireless communication processor to configure the radio frequency front-end to be in the sleep state or the off state.

18. A communication apparatus, comprising a unit or a module configured to perform the method according to any one of claims 11 to 17.

19. A communication apparatus, comprising one or more processors, wherein the one or more processors are configured to perform the method according to any one of claims 11 to 17.

20. A readable storage medium, wherein the readable storage medium comprises a program, and when the program is run on an apparatus, the apparatus is enabled to perform the method according to any one of claims 11 to 17.

21. A chip system, wherein the chip system comprises at least one chip and a memory, and the at least one chip is configured to read and execute a program stored in the memory, to implement the method according to any one of claims 11 to 17.

22. A computer program product, wherein when the computer program product runs on an apparatus, the apparatus is enabled to perform the method according to any one of claims 11 to 17.

23. A program product, wherein when the program product runs on a device, the device is enabled to perform the method according to any one of claims 11 to 17.
